(19)

Europäisches
Patentamt
European
Patent Office
Office européen
des brevets

(11) **EP 1 939 873 B1**

(12) **EUROPEAN PATENT SPECIFICATION**

(45) Date of publication and mention
of the grant of the patent:
**30.03.2011 Bulletin 2011/13**

(51) Int Cl.:
*G11B 7/243* *(2006.01)* *G11B 7/004* *(2006.01)*

(21) Application number: **08103276.5**

(22) Date of filing: **20.10.2005**

(54) **Generating optical contrast using thin layers**

Erzeugen von optischem Kontrast mit dünnen Schichten

Génération de contraste optique utilisant des couches minces

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**02.07.2008 Bulletin 2008/27**

(62) Document number(s) of the earlier application(s) in
accordance with Art. 76 EPC:
**05825775.9 / 1 938 321**

(73) Proprietor: **ARMI Products Corporation
Hsinchu (TW)**

(72) Inventors:
• **LAI, Hsin-cheng
7F-3, No. 608, Sec.2, Gongyi Road
40844, Taichung City (TW)**
• **Lu, Cheng, Ji
No. 18, Alley 122, Lane 459 Guangming Road
31066, Hsinchu County (TW)**
• **Chong, Yong Ching
43858, Taichung County (TW)**
• **Yen, Ko-fu
No. 11, Alley 98, Lane 399, Sec.2, Singnan Rd.
235, TAIPEI (TW)**

• **Lee, Fang-Yu
No. 82, Lane 746, Sec. 4, Jhangnan Road
502, Changhua County (TW)**
• **Chang, Yu-yang
5F., No.84, Lane 417, Guangfu S. Rd.
110, Taipei City (TW)**
• **Shuy, Geoffrey, Wen-tai
Ma On Shan
New Territories (HK)**

(74) Representative: **Cabinet Plasseraud
52, rue de la Victoire
75440 Paris Cedex 09 (FR)**

(56) References cited:
**EP-A- 1 457 977 WO-A-2004/057594**

• PATENT ABSTRACTS OF JAPAN vol. 2003, no.
12, 5 December 2003 (2003-12-05) & JP 2005
182860 A (TDK CORP), 7 July 2005 (2005-07-07)
• PATENT ABSTRACTS OF JAPAN vol. 2003, no.
01, 14 January 2003 (2003-01-14) & JP 2002
254808 A (RAITOKU KAGI KOFUN
YUGENKOSHI), 11 September 2002 (2002-09-11)

**Description**

Background of the Invention

This invention relates to generating optical contrast using thin layers.

An optical recording medium stores data by producing optical contrasts in the medium, such as contrasts in reflectivity with respect to a light beam. For example, binary data can be stored ("inscribed") on the recording medium by forming regions having higher and lower reflectivities to represent zeros and ones.

One type of recording medium for use in a recordable disc has a recordable (inscribable) layer in which data can be written once and read many times. During an inscription process, a write beam (for example, a laser beam) is modulated between a high power level and a low power level as the write beam scans the disc according to encoded data (an encoded version of data that a user intends to write to the disc). When the write beam is at the high power level, heat generated by the high power level induces a reaction that alters the reflectance of the recordable layer, thereby generating optical contrast. During a read process, a read beam scans the disc to detect the sequence of optical contrasts, and then decodes the sequence to retrieve the written data.

Currently commercial available recordable discs typically use an inscription layer that consists of an organic dye and is approximately 100 nm thick. Before data is recorded on the disc, the dye is relatively transparent (for example, has a transmissivity greater than 0.75 and an absorption less than 0.25) with respect to the read beam. Data are written to the recordable layer by applying a write beam having a power above a threshold to induce a (typically exothermic) chemical reaction in the dye, causing the dye to turn opaque. At the same time, the energy released in the reaction may cause a micro-rupture mark on the disc that also reduces the reflectivity. The disc includes a reflective layer behind the inscription layer such that a read beam that passes through the inscription layer is reflected back through the inscription layer towards the source of the read beam and redirected towards a detector where the reflection is detected. At a region where the dye is opaque, the inscription layer absorbs the read beam as it passes to the reflective layer and again as it passes back through the inscription layer, and therefore the reflectivity of the disc is lower at such a region than the regions of "virgin" transparency.

In the description below, the transmissivity of light of a layer of material is defined as the percentage of incident light that passes through the layer of material. The reflectivity of light of a layer of material is defined as the percentage of incident light that is reflected by the layer of material. The absorption of light of a layer of material is defined as a percentage of incident light that is absorbed by the layer of material as the light passes once through the layer of material.

A disc that has a particular structure, which generally includes one (or multiple) inscription layer(s), has an overall reflectivity (which is a result of a combination of reflection, transmission, and absorption due to individual constituent layers of the disc) with respect to a read beam that is incident on the disc. This overall reflectivity varies between regions that have been inscribed and those that have not. Standards for recordable discs relate to this overall reflectivity, and are specified for a particular wavelength (or range of wavelengths) of the read beam. Standards also relate to characteristics of the writing process, such as the wavelength, power level, and modulating format of the write beam when writing particular types of marks on the disc.

Examples of the recordable disc include CD-Recordable (CD-R), DVD-R, DVD+R, double layer DVD+R (also called DVD+R DL), double layer DVD-R (also called DVD-R DL), High Density DVD (HD-DVD), and Blu-ray DVD. Each type of disc follows a standard specifying encoding/decoding requirements, as well as optical properties of the disc. In the examples below, R1 and R2 refer to the overall reflectivities with respect to a read beam before and after, respectively, recording. An examples of such standards includes the CD-R standard (specified in Philips and Sony's Recordable CD Standard, also known as the Orange Book), which requires that R1 $\geq$ 45% and that the reflectivity decrease at least 60% after recording. Thus, (R1 - R2)/R1 > 60% and R2/R1 < 40%. The write and read beams are required to have wavelengths of about 780 nm. The DVD+R standard similarly requires that R1 $\geq$ 45%, and that the reflectivity decrease at least 60% after recording, with the wavelengths of the read and write beams being 650 nm and 658 nm, respectively.

Some optical recordable discs using non-dye approaches have been proposed. In one example, the recordable layer includes a layer of material that becomes more reflective after the inscription process. An example is a metallic layer with surface features in a range between 200 nm to 800 nm, which reflects the read beam in random directions, thereby reducing intensity of the reflected light in the direction of the optical detector. When a write beam is applied to the metallic layer, the metallic material melts and, due to surface tension, forms a smoother surface that can reflect a greater percentage of the read beam in the direction of the optical detector.

In another example, the recordable layer includes a relatively less reflective metal-hypo-oxide material (for example, $Te_2O_3$) that can be induced to decompose into a relatively more reflective mixture of metal and metal-oxide (for example, $Te + TeO_2$) after the inscription process.

Rewriteable discs which allow erasure of inscribed data are also available. For example, some rewriteable discs use material optical characteristics of phase change from micro-crystalline phase of higher reflectivity to lower reflective amorphous phase for recording, and the reverse phase change for erasing.

**EP 1 939 873 B1**

Summary

In a general aspect, thin-layered nanostructures provide an approach for generating optical contrasts by using one or more of the properties of materials described below.

(1) Each material has a certain charge carrier density n (which represents the number of electrons or holes per cubic centimeter), in which the charge carriers have an effective mass m. The values ofn and m can be measured through methods known in the semiconductor field, such as Hall resistance measurements.

(2) When there is a "net" localized charge density introduced in the material, there will be a sheath layer surrounding the localized charge density, in which the sheath layer has a thickness referred to as the Debye length. When there are fluctuations in an electric field created by changes in a localized charge density, the influences of the fluctuations are mostly felt by charge carriers located within the Debye length. These charge density changes can be, for example, induced by charge carriers moving through interfaces, electromagnetic (EM) waves passing through the material, or charge density fluctuations due to thermal effects.

(3) The conduction band and/or valance band energy level (sometimes called chemical potentials) differences at an interface(s) make electrons (or holes) move from one side of the interface to the other side, causing the following effects:

     (a) it can change the local n value of the structure at the interface(s); (b) it can create a localized electric field at the interface; (c) it can change the effective mass of the charge carriers. Therefore, it can change the electrical and optical properties at the interface(s).

(4) The EM waves can propagate through a thick (bulk) material only when the frequency of the EM wave is higher than a critical frequency, called the plasma frequency of the material. If the frequency of the EM wave is lower than its plasma frequency, the radiation will be reflected and/or absorbed by the material. When the frequency of the EM wave is higher than the plasma frequency, the EM wave can be absorbed only if the frequency matches the quantum absorption frequencies. Other than this condition, the material becomes very transparent to the EM wave. However, when the thickness of a material is smaller than its Debye length, the material shall be partially transparent to EM waves.

(5) To a first order approximation, the plasma frequency of a material is proportional to the square root of the charge carrier density n, and inversely proportional to the square root of the effective mass m.

(6) To a first order approximation, the Debye length of a material is proportional to the average kinetic energy of the charge carriers (or the temperature of the material), and inversely proportional to the square root of the charge carrier density n.

(7) A change of the material properties (including a change in n and/or m values) can be accomplished by making the interface(s) (of properly designed nanostructures) to be less distinct through, for example, thermally induced alloying, diffusion, material mixing, or chemical reactions.

(8) The nanostructure becomes more transparent to a read laser beam when the charge carrier density is reduced and/or the effective mass is enhanced to a level that the plasma frequency of the structure changes from higher to lower value than the read laser beam frequency. Thus, optical contrast can be generated by a properly designed nanostructure.

In one aspect, in general, recording layers make use of a nanostructure (for example, thin layers having thicknesses such as 2 nm, 10 nm, 15 nm, 20 nm, 25 nm, or 30 nm) that has at least two layers of materials having sufficient reflectivity (and, optionally, sufficient opacity). The thicknesses and materials of the at least two layers are selected so that the nano-structure becomes more transparent when the interface(s) of the at least two layers becomes less distinct through thermally induced alloying, diffusion, material mixing, or chemical reactions. This process changes the material optical transmissivity, which is accomplished by lowering the value of n (charge carrier density) and/or increasing the value of m (effective mass) in the nanostructure by reducing the distinctiveness of the interface(s) of the nanostructure, or by creating another layer of material at the interface. This nanostructure lowers the plasma frequency to a value that below the frequency of the read laser beam after the interface is heated up to pass a certain temperature. Thus, the structure becomes transparent or changes from more reflective to more transparent and less reflective to the read beam. The inscription process is performed by an encoding system that modulates the power level of a laser beam, an electron beam, or the level of a high intensity electric field from a metal tip, to apply energy to the two layers to cause the alloying, diffusion, material mixing, or chemical reactions. Regardless of the type of encoding system used, these inscribed data can be detected by using an optical scanning system, based on contrast in either transmitted or reflected light.

In another aspect, in general, a recordable medium includes a recordable structure having a transmissivity with respect to a read beam that increases upon application of an energy.

Implementations of the recordable medium may include one or more of the following features. The transmissivity of the recordable structure before application of the energy is greater than 50%. The transmissivity of the recordable structure is greater than 50% after application of the energy. The recordable structure includes a first layer and a second layer. In some examples, at least one of the first and second layers has an average thickness less than 10 nm. In some examples, at least one of the first and second layers has an average thickness less than 5 nm. In some examples, at least one of the first and second layers has an average thickness less than 2 nm. The first and second layers combine upon application of the energy.

In some examples, the first and second layers include two different semiconductor layers. In some examples, the first and second layers include two different metal layers. In some examples, the first and second layers include two different dielectric layers. In some examples, the first and second layers include one semiconductor layer and one metal layer. In some examples, the first and second layers include one semiconductor layer and one dielectric layer. In some examples, the first and second layers include one metal layer and one dielectric layer. In some examples, the first layer includes aluminum, copper, gold, silver, or tin, and the second layer includes silicon, silicon oxide, germanium, tungsten oxide, or titanium oxide.

The recordable structure includes a first layer, a second layer, and a third layer. The first layer, the second layer, and the third layer combine upon application of the energy. In some examples, the first, second, and third layers include a metal layer, a dielectric layer, and a semiconductor layer. In some examples, the first, second, and third layers include a first metal layer, a dielectric or semiconductor layer, and a second metal layer. The first and second metal layers may include the same or different materials. In some examples, the first, second, and third layers include a first dielectric layer, a metal or semiconductor layer, and a second dielectric layer. The first and second dielectric layers may include the same or different materials. In some examples, the first, second, and third layers include a first semiconductor layer, a metal or dielectric layer, and a second semiconductor layer. The first and second semiconductor layers may include the same or different materials.

In some examples, the recordable structure has a thickness less than 20 nm. In some examples, the recordable structure has a thickness less than 10 nm. The recordable structure has a first layer and a second layer, in which each of the thickness of the first and second layers is less than three times a Debye length determined based on a charge carrier density in the layer. The read beam has a frequency in the range of 400 nm to 460 nm, 630 nm to 690 nm, or 750 nm to 810 nm. The energy is provided by a write beam, and a reflectivity of the recordable medium decreases upon application of the energy. The reflectivities of the recordable medium before and after application of the energy is compatible with at least one of CD-R, DVD+R, DVD-R, double layer DVD+R, double layer DVD-R, Blu-ray Disc, and HD-DVD standard.

In another aspect, in general, an optical disc includes a recordable structure having a transmissivity with respect to a read beam that increases upon application of an energy.

Implementations of the optical disc may include one or more of the following features. The recordable structure includes an inscription layer having at least two sub-layers that combine after application of a write power. The inscription layer has a reflectivity R1 and a transmissivity T1 with respect to a read beam before inscription. The inscription layer has a reflectivity R2 and a transmissivity T2 with respect to the read beam after inscription, in which R1 > R2 and T1 < T2. The optical disc complies with at least one of a CD-R, DVD-R, DVD+R, double layer DVD+R, double layer DVD-R, Blu-ray Disc, and HD-DVD standard.

In another aspect, in general, a recordable medium includes a recordable structure that has inscribed regions in which information is carried by the presence or absence of inscription, at least some of the inscribed regions having transmissivity with respect to a read beam that is higher than regions that have not been inscribed.

Implementations of the recordable medium may include one or more of the following features. The inscribed region represents a logical 1. The blank region includes a first material and a second material having distinct boundaries in between the two materials, and the recorded region has a third material generated by an interaction between the first and second materials. The recorded region has a reflectivity with respect to the read beam that is lower than the blank region, the reflectivities of the recorded and blank regions being compatible with at least one of CD-R, DVD+R, DVD-R, double layer DVD+R, double layer DVD-R, Blu-ray Disc, and HD-DVD standard.

In another aspect, in general, an optical system includes a recordable medium and an optical drive. The recordable medium includes a recordable structure having a transmissivity with respect to a read beam that increases upon application of a write power. The optical drive includes a light source to generate the read beam, a focusing mechanism to focus the read beam on the recordable structure, and a light detector to detect light reflected from the recordable medium.

Implementations of the optical system may include one or more of the following features. A reflectivity of the recordable medium decreases upon application of the write beam. The reflectivities of the recordable medium before and after application of the write beam are compatible with at least one of CD-R, DVD+R, DVD-R, double layer DVD+R, double layer DVD-R, Blu-ray Disc, and HD-DVD standard.

In another aspect, in general, an optical system includes a recordable medium and an optical drive. The recordable medium includes a recordable structure having a transmissivity with respect to a read beam that increases upon application of a write power. The optical drive is adapted to record data in the recordable medium and has pre-stored information related to a write strategy that is associated with an identifier for identifying the recordable medium.

The system uses the write strategy to write information on the identified recordable medium.

Implementations of the optical system may include one or more of the following features. A reflectivity of the recordable medium decreases upon application of the energy. The reflectivities of the recordable medium before and after application of the energy are compatible with at least one of CD-R, DVD+R, DVD-R, double layer DVD+R, double layer DVD-R, Blu-ray Disc, and HD-DVD standard.

In another aspect, in general, a method of writing information in a recordable medium includes applying an energy to a recordable structure to increase a transmissivity of the recordable structure with respect to a read beam.

Implementations of the method may include one or more of the following features. The read beam has a wavelength between 350 nm and 450 nm. The recordable structure includes a first layer and a second layer. Upon application of the energy, the first and second layers combine to generate a third layer. The third layer has a characteristic frequency that is less than the frequency of the read beam, and at least one of the first and second layers has a characteristic frequency that is higher than the read beam. The characteristic frequency of a layer is proportional to the square root of $n/m$, in which $n$ represents the charge carrier density of the layer and $m$ represents effective mass of the charge carriers in the layer. The characteristic frequency includes a plasma frequency. Applying the energy to the recordable structure also decreases a reflectivity of the recordable medium. The reflectivities of the recordable medium before and after application of the energy are compatible with at least one of CD-R, DVD+R, DVD-R, double layer DVD+R, double layer DVD-R, Blu-ray Disc, and HD-DVD standard.

In another aspect, in general, a method of reading information from a recordable medium, includes focusing a read beam on a recordable structure to detect a first portion having a reflectivity that is lower and a transmissivity that is higher than a second portion.

Implementations of the method may include one or more of the following features. Information is carried by the presence and absence of the first portion. The read beam has a frequency in the range of 400 nm to 460 nm, 630 nm to 690 nm, or 750 nm to 810 nm. The reflectivities of the first and second portions are compatible with at least one of CD-R, DVD+R, DVD-R, double layer DVD+R, double layer DVD-R, Blu-ray Disc, and HD-DVD standard.

In another aspect, in general, a method of writing data includes applying an energy to an inscription layer to change a characteristic frequency of the inscription layer so that the characteristic frequency changes from higher than a specified read beam frequency to lower than the read beam frequency, the characteristic frequency of a layer being proportional to the square root of $n/m$, in which n represents the charge carrier density of the layer and m represents effective mass of the charge carriers in the layer.

Implementations of the method may include one or more of the following features. The read beam frequency corresponds to a wavelength between 400 nm to 460 nm. A reflectivity of the recordable structure is reduced upon application of the energy. The reflectivities of the recordable structure before and after application of the energy is compatible with at least one of CD-R, DVD+R, DVD-R, double layer DVD+R, double layer DVD-R, Blu-ray Disc, and HD-DVD standard.

In another aspect, in general, a recordable medium includes a recordable structure having a reflectivity greater than 50% with respect to a read beam, in which the transmissivity of the recordable structure becomes greater than 50% with respect to the read beam upon application of an energy.

Implementations of the recordable medium may include one or more of the following features. The recordable structure has a first layer and a second layer that react upon application of the energy. At least one of the first and second layers is less than 10 nm.

In another aspect, in general, a recordable medium includes a recordable structure having a transmissivity greater than 50% with respect to a read beam, in which the reflectivity of the recordable structure becomes greater than 50% upon application of an energy.

In another aspect, in general, a recordable medium includes a recordable structure including at least a first layer having a first plasma frequency $\alpha 1$. When a write power is applied to the recordable structure, a second layer is formed having a second plasma frequency $\alpha 2$, in which $\alpha 1 < \alpha_r < \alpha 2$ or $\alpha 2 < \alpha_r < \alpha 1$, where $\alpha_r$ is a frequency of a read beam that has a frequency equal to or different from a frequency of a write beam imparting the write power. The plasma frequency of a layer is proportional to the square root of $n/m$, in which n represents a charge carrier density of the layer and m represents effective mass of the charge carriers in the layer.

Implementations of the recordable medium may include one or more of the following features. In some examples, the recordable structure includes a third layer adjacent to the first layer prior to application of the write power, and the second layer is formed based on a mixing of materials in the first and third layers upon application of the write power. In some examples, the recordable structure includes a third layer adjacent to the first layer prior to application of the write power, and the second layer is formed based on a chemical reaction of materials in the first and third layers upon application of the write power. The chemical reaction is endothermic. The $\alpha_r$ parameter corresponds to a wavelength between 400 nm to 460 nm.

In another aspect, in general, a recordable medium includes a recordable structure including a first layer and a second layer, the first layer having a first plasma frequency $\alpha 1$, the second layer having a second plasma frequency

$\alpha 2$. The two layers are selected such that when a write power is applied to the recordable structure, the first and second layers interact to form a third layer that has a third plasma frequency $\alpha 3$ so that $\alpha 1 < \alpha_r < \alpha 3$, or $\alpha 2 < \alpha_r < \alpha 3$, or $\alpha 3 < \alpha_r < \alpha 1$, or $\alpha 3 < \alpha_r < \alpha 2$, in which $\alpha_r$ is the frequency of a read beam.

Implementations of the recordable medium may include one or more of the following features. The read beam has a frequency equal to a write beam that imparts the write power. The plasma frequency of a layer is based on a density of charge carriers in the layer and effective mass of the charge carriers. A layer has a higher transmissivity with respect to the read beam when $\alpha_r$ is higher than the plasma frequency of the layer, as compared to another layer in which $\alpha_r$ is lower than the plasma frequency of the other layer. The $\alpha_r$ parameter corresponds to a wavelength between 400 nm to 460 nm.

In another aspect, in general, a method includes applying a write power to a recordable structure including a first layer and a second layer, the first layer having a first plasma frequency $\alpha 1$, and the second layer having a second plasma frequency $\alpha 2$. The write power causes the first and second layers to interact to form a third layer that has a third plasma frequency $\alpha 3$. The two layers are selected so that at least one of the following conditions is satisfied: $\alpha 1 < \alpha_r < \alpha 3$, $\alpha 2 < \alpha_r < \alpha 3$, $\alpha 3 < \alpha_r < \alpha 1$, and $\alpha 3 < \alpha_r < \alpha 2$, in which $\alpha_r$ is a frequency of a read beam that has a frequency equal to or different from the write power.

In another aspect, in general, a recordable medium includes a recordable structure including a first layer and a second layer, at least one of the first and second layers having a thickness that is less than a Debye length determined based on a charge carrier density in the layer. The first and second layers interact upon application of an energy to cause an optical property of the recordable structure to change. The optical property includes at least one of a reflectivity and a transmissivity with respect to a read beam.

Implementations of the recordable medium may include one or more of the following features. The energy is imparted by a write beam having an energy density greater than a specified value and imparted on the recordable structure for at least a specified duration of time. The transmissivity of the recordable structure with respect to the read beam increases by at least 10% upon application of the energy.

In another aspect, in general, a recordable medium includes a recordable structure including a first layer and a second layer, at least one of the first and second layers having a thickness that is less than 10 nm. The first and second layers interact upon application of a write power to cause an optical property of the recordable structure to change. The optical property includes at least one of a reflectivity and a transmissivity with respect to a read beam.

Implementations of the recordable medium may include one or more of the following features. The transmissivity of the recordable structure with respect to the read beam increases by at least 10% upon application of the write power. Each of the first and second layers has a thickness that is less than a Debye length determined based on a charge carrier density in the layer. At least one of the first and second layers has a thickness that is less than 5 nm.

In another aspect, in general, a method includes applying a write power to a recordable structure comprising a first layer and a second layer, at least one of the first and second layers having a thickness that is less than a Debye length determined based on a charge carrier density in the layer.

In another aspect, in general, a recordable medium includes a recordable structure having an optical property that changes upon application of an energy to cause an endothermic reaction to occur in the recordable structure.

Implementations of the recordable medium may include one or more of the following features. The recordable structure has a first layer and a second layer that reacts in an endothermic reaction upon application of the energy. In some examples, the endothermic reaction includes an endothermic chemical reaction. In some examples, the endothermic reaction includes a mixing of materials in the first and second layers. At least one of the first and second layers is less than 10 nm. The energy is imparted by a write beam having an energy above a predetermined value, and is applied for at least a specified duration of time. In some examples, the optical property includes a transmissivity with respect to a read beam. The transmissivity of the recordable structure increases upon application of the energy. The transmissivity of the recordable structure changes from less than 50% to more than 50% upon application of the energy. In some examples, the optical property includes a reflectivity with respect to a read beam. In some examples, the optical property includes an absorption rate of the recordable structure.

In another aspect, in general, a recordable medium includes a recordable structure in which upon application of an energy, the absorption of the recordable structure with respect to a read beam does not change more than 10%, whereas the transmissivity and the reflectivity with respect to the read beam changes more than 10%.

Implementations of the recordable medium may include one or more of the following features. The recordable structure has a first layer and a second layer that reacts upon application of the energy. At least one of the first and second layers is less than 10 nm.

In another aspect, in general, a recordable medium includes a recordable structure including a first layer and a second layer having different optical properties. The first and second layers have a distinct boundary between the layers before application of a write power, and after application of the write power, the boundary between the first and second layers becomes less distinct, for example, through intermixing of materials in the first and second layers so that an optical property the recordable structure with respect to a read beam is modified.

In another aspect, in general, an optical disc drive includes pre-stored information that identifies whether an optical disc belongs to a group of disc that includes a recordable structure having a transmissivity with respect to a read beam that increases upon application of an energy.

In another aspect, in general, a recordable medium includes a recordable structure that includes a first layer and a second layer in which the first and second layers do not completely overlap, and the first and second layers combine upon application of a write power to cause a change in an optical property of the recordable structure with respect to a read beam.

Implementations of the recordable medium may include one or more of the following features. In some examples, the first layer includes discontinuous regions. Both the first and second layers include discontinuous regions. The regions have diameters smaller than 100 nm. In some examples, the first layer includes a contiguous region having a shape that forms holes. Each of the first and second layers includes a contiguous region having a shape that forms holes. The holes have diameters smaller than 100 nm. In some examples, the first layer has discontinuous regions and the second layer includes a contiguous region having a shape that forms holes. The recordable medium also includes a substrate attached to the recordable structure, in which the first layer substantially overlays the entire surface of one side of the substrate, and the second layer overlays less than 90% of the surface of one side of the substrate. In some examples, the Debye length of at least one of the first and second layers is less than 5 nm. In some examples, the Debye length of at least one of the first and second layers is less than 1 nm. The Debye length is determined based on a charge carrier density in the layer.

In another aspect, in general, a recordable medium includes a substrate having a surface, and a recordable structure attached to the substrate. The recordable structure has a first material and a second material, at least one of the first and second materials overlaying less than 90% of the surface of the substrate. The first and second materials combine upon application of a write power to cause a change in an optical property of the recordable structure with respect to a read beam.

Implementations of the recordable medium may include one or more of the following features. In some examples, at least one of the materials includes discontinuous regions. The regions have diameters smaller than 100 nm. In some examples, at least one of the first and second layers of materials includes a contiguous region having a shape that forms holes. The holes have diameters smaller than 100 nm.

In another aspect, in general, a recordable medium includes a substrate having a surface, and a recordable structure on the substrate. The recordable structure has a first material and a second material that combine upon application of a write power to cause a change in an optical property of the recordable structure with respect to a read beam. At least one of the first and second materials has an effective thickness less than 5 nm. The effective thickness of a material is defined as a volume of the material divided by an area of the surface of the substrate.

Implementations of the recordable medium may include one or more of the following features. At least one of the first and second materials includes discontinuous regions.

In another aspect, in general, an optical disc includes a recordable structure having a first layer and a second layer in which the first and second layers do not completely overlap. The first and second layers combine upon application of a write power to cause a change in an optical property of the recordable structure with respect to a read beam.

Implementations of the optical disc may include one or more of the following features. At least one of the first and second layers includes discontinuous regions. At least one of the first and second layers includes a contiguous region having a shape that forms holes.

In another aspect, in general, a method of writing data includes applying an energy to a recordable medium that includes a substrate and a recordable structure attached to the substrate. The recordable structure has a first material and a second material that combine upon application of the energy to cause a change in an optical property of the recordable structure with respect to a read beam. At least one of the first and second materials overlays less than 90% of the substrate.

In another aspect, in general, a method of fabricating a recordable medium includes depositing a first material and a second material above one side of a substrate, in which at least one of the first and second materials overlays less than 90% of a surface of the side of the substrate.

Implementations of the method may include one or more of the following features. The method also includes controlling a power applied to a machine used to deposit the first and second materials to control a percentage of the surface covered by the first and second materials. The method also includes controlling a duration of time for depositing the first and second materials to control a percentage of the surface covered by the first and second materials.

In another aspect, in general, a recordable medium includes a recordable structure including a first layer having a reflectivity R1 and a transmissivity T1, a second layer having a transmissivity T2, and a third layer having a reflectivity R3. The second layer is disposed between the first and third layers and has a thickness that is less than a Debye length determined based on a charge density of the second layer. The recordable structure has an overall reflectivity $R_{sum}$ that is greater than $R1 + T1^2 * T2^2 * R2$.

Implementations of the recordable medium may include one or more of the following features. The second layer has a thickness of $d$ such that the reflectivity of the recordable structure has a substantially optimal reflectivity value. A difference between the substantially optimal reflectivity value and a maximum reflectivity value is less than 10% of the maximum reflectivity value, in which the maximum reflectivity value is determined by finding the maxima of the reflectivity of the recordable structure when the thickness of the second layer varies between $0.8d$ to $1.2d$. When the thickness of the second layer varies by 10%, the reflectivity decreases by at least 10%.

In another aspect, in general, a recordable medium includes a recordable structure including a first layer having a reflectivity R1, a second layer, and a third layer having a reflectivity R2. The second layer is disposed between the first and third layers. The second layer has a thickness that is less than a Debye length determined based on a charge density of the second layer. The recordable structure has an overall reflectivity R3, in which $R3 < R1$ and $R3 < (1 - R1) * R2$.

Implementations of the recordable medium may include one or more of the following features. The second layer has a thickness of d such that the reflectivity of the recordable structure has a substantially minimum value. When the thickness of the second layer varies by 10%, the reflectivity increases by at least 10%.

In another aspect, in general, a method of generating optical contrast includes applying an energy to a micro-resonant structure having at least a first layer L1, a second layer L2, and a third layer L3 to cause at least two of the layers to combine. The layer L2 is disposed between the layers L1 and L3. The layer L1 has a reflectivity R1 and a transmissivity T1. The layer L3 has a reflectivity R3. The layer L2 has a transmissivity T2 and a thickness that is less than one-fourth of a wavelength of a read beam. Prior to applying the energy, the micro-resonant structure has an overall reflectivity $R_{sum}$ that is greater than $R1 + T1^2 * T2^2 * R3$.

Implementations of the recordable medium may include one or more of the following features. The layer L2 has a thickness that is less than a Debye length determined based on a charge carrier density of the layer L2. After applying the energy, the reflectivity of the micro-resonant structure decreases. After applying the energy, the transmissivity of the micro-resonant structure increases. The layer L2 has a reflectivity that is less than those of the layers L1 and L3. The layer L2 has a higher transmissivity than those of layers L1 and L3.

In some examples, the layers L2 and L3 combine to form a layer L4 that has a reflectivity higher than that of the layer L2. In some examples, the layers L1 and L2 combine to form a layer L4 that has a reflectivity higher than that of the layer L2. In some examples, the layers L1, L2, and L3 combine to form a layer L4. The layer L4 has a transmissivity higher than the overall transmissivity of layers L1, L2, and L3 before inscription. The layer L4 has a reflectivity less than the overall reflectivity of layers L1, L2, and L3 before inscription. In some examples, the layers L2 and L3 combine to form a layer L4 that has a reflectivity lower than those of the layers L1 and L3.

In some examples, the micro-resonant structure also includes a layer L4 that has a reflectivity higher than that of the layer L2, and the layers L1, L4, L2, and L3 are positioned in sequence. Applying the energy causes the layers L4 and L2 to combine to form a layer L5 that has a reflectivity lower than those of the layers L1 and L3, the layer L5 being disposed between the layers L1 and L3. In some examples, the micro-resonant structure also includes a layer L4 having a reflectivity lower than those of the layers L1 and L3, and the layers L1, L2, L4, and L3 are positioned in sequence. The layers L4 and L3 combine to form a layer L5 that has a reflectivity higher than that of the layer L2, the layer L2 being disposed between the layers L1 and L5. In some examples, applying an energy to the micro-resonant structure causes the layers L2 and L3 combine to form a layer L4 that has a transmissivity higher than that of the layer L1.

In some examples, the micro-resonant structure also has a layer L4 having a reflectivity lower than those of the layers L1 and L3, the layers L1, L2, L4, and L3 being positioned in sequence, the layers L2 and L4 having different materials. In some examples, after inscription, the layers L1 and L2 combine to form a layer L5 that has a reflectivity lower than that of the layer L1. In some examples, after inscription, the layers L2 and L4 partially combine to form a layer L5 having thickness less than a sum of the thicknesses of the layers L2 and L4, the layer L5 having a reflectivity less than those of the layers L1 and L3.

In some examples, the micro-resonant structure also includes layers L4, L5, and L6, the layers L1, L2, L4, L5, L6, and L3 being positioned in sequence. The layers L4, L5, and L6 have reflectivities lower than those of the layers L1 and L3, and adjacent layers of L2, L4, L5, and L6 have different materials. The layers L4 and L5 combine to form a layer L7 after inscription, the layer L7 having a reflectivity higher than the layers L2 and L6. In some examples, after inscription, the layers L1, L2, and L7 form a micro-resonant cavity having an overall reflectivity greater than $R1 + T1^2 * T2^2 * R7$, R7 being the reflectivity of the layer L3. In some examples, after inscription, the layers L1, L2, and L7 form a micro-resonant cavity having an overall reflectivity $R_{sum}$, in which $R_{sum} < R1$ and $R_{sum} < T1^2 * T2^2 * R7$, R7 being the reflectivity of the layer L7. In some examples, after inscription, the layers L7, L6, and L3 form a micro-resonant cavity having an overall reflectivity greater than $R7 + T7^2 * T6^2 * R3$, R7 being the reflectivity of the layer L7, T7 being the transmissivity of the layer L7. In some examples, after inscription, the layers L7, L6, and L3 form a micro-resonant cavity having an overall reflectivity $R_{sum}$, in which $R_{sum} < R7$ and $R_{sum} < T7^2 * T6^2 * R3$, R7 being the reflectivity of the layer L7, T7 being the transmissivity of the layer L7.

In some examples, the micro-resonant structure also includes layers L4 and L5, the layers L1, L2, L4, L5, and L3 being positioned in sequence. The layers L1, L2, and L4 form a micro-resonant cavity having an overall reflectivity greater than $R1 + T1^2 * T2^2 * R4$, R4 being the reflectivity of the layer L4. The layers L4, L5, and L3 form a micro-resonant cavity having an overall reflectivity greater than R4 + T4$^2$ * T5$^2$ * R3, T4 being the transmissivity of the layer L4, T5 being the transmissivity of the layer L5. The layers L2, L4, and L5 combine to form a layer L6 after inscription, the layers L1, L6, and L3 forming a micro-resonant cavity. The overall reflectivity of the micro-resonant structure before inscription is greater than the overall reflectivity of the micro-resonant structure after inscription.

In some examples, the micro-resonant structure also has a layer L4 that has a reflectivity lower than that of the layer L3, the layers L1, L2, L3, and L4 being positioned in sequence. After inscription, the layers L3 and L4 combine to form a layer L5 that has a reflectivity that is higher than the layer L2 but lower than the layer L3.

In another aspect, in general, a recordable medium, includes a micro-resonant structure having at least a first layer, a second layer, and a third layer. The second layer is disposed between the first and second layers and has a thickness d such that the reflectivity of the micro-resonant structure has a substantially optimal reflectivity value. The thickness d of the second layer is less than a Debye length determined based on a charge density of the second layer.

Implementations of the recordable medium may include one or more of the following features. The substantially optimal reflectivity value deviates from a maximum reflectivity value by less than 10% of the maximum reflectivity value, the maximum reflectivity value being determined by finding the maxima of the reflectivity of the recordable structure when the thickness of the second layer varies between 0.8*$d$ to 1.2*$d$.

In another aspect, in general, a recordable medium includes an inscription layer and a contrast enhancing layer. The inscription layer has at least two sub-layers that combine upon application of a write power, the inscription layer having a reflectivity R1 before application of the write power and a reflectivity R2 after application of the write power. The contrast enhancing layer does not combine with the sub-layers of the inscription layer upon application of the write power. The contrast enhancing layer and the inscription layer together have a reflectivity R3 before application of the write power and a reflectivity R4 after application of the write power, in which |R4 - R3| > |R2 - R1|.

Implementations of the recordable medium may include one or more of the following features. In some examples, the contrast enhancing layer includes a metal layer. In some examples, the contrast enhancing layer includes a dielectric. In some examples, the contrast enhancing layer includes a semiconductor. In some examples, the contrast enhancing layer includes at least one of silicon, germanium, zinc sulfide, and zinc oxide. The contrast enhancing layer has a transmissivity with respect to the read beam that is greater than 50%.

In some examples, a plasma frequency of the inscription layer decreases after recording, and the contrast in reflectivity or transmissivity increases after adding the contrast enhancement layer. In some examples, a plasma frequency of the inscription layer increases after recording, and the contrast in reflectivity or transmissivity increases after adding the contrast enhancement layer. The thickness of contrast enhancement layer is smaller than 20 nm.

The recordable medium also includes a second contrast enhancement layer that does not combine with the sub-layers of the inscription layer upon application of the write power. The first contrast enhancing layer, the second contrast enhancing layer, and the inscription layer together have a reflectivity R5 before application of the write power and a reflectivity R6 after application of the write power, and |R6 - R5| > |R4 - R3|. The first and second contrast enhancement layers combine with each other, but the first and second contrast enhancement layers do not combine with the inscription layer. The first and second contrast enhancement layers are positioned at different sides of the inscription layer. The two sub-layers include at least one of (a) two different semiconductor layers, (b) two different metal layers, (c) two different dielectric layers, (d) one semiconductor layer and one metal layer, (e) one semiconductor layer and one dielectric layer, and (f) one metal layer and one dielectric layer. The inscription layer has a thickness less than 20 nm.

In another aspect, in general, an optical disc includes an inscription layer and a contrast enhancing layer. The inscription layer has at least two sub-layers that combine upon application of a write power, the inscription layer having a reflectivity R1 before application of the write power and a reflectivity R2 after application of the write power. The contrast enhancing layer does not combine with the sub-layers of the inscription layer upon application of the write power. The contrast enhancing layer and the inscription layer together have a reflectivity R3 before application of the write power and a reflectivity R4 after application of the write power, and |R4 - R3| > |R2 - R1|.

Implementations of the optical disc may include one or more of the following features. The inscription layer has a transmissivity T1 before inscription and a transmissivity T2 after inscription, and T1 < T2. The parameters R1, R2, T1, and T2 comply with at least one of a CD-R, DVD-R, DVD+R, double layer DVD+R, double layer DVD-R, Blu-ray Disc, and HD-DVD standard. The inscription layer has a thickness less than 20 nm

In another aspect, in general, a recordable medium includes a recordable structure to generate a first optical contrast between portions of the recording structure subject to a write power and portions that have not been subject to the write power. The recordable medium also includes a layer of material that does not interact with the recordable structure, the layer of material selected so that the recording structure and the layer of material together generate a second optical contrast that is greater than the first optical contrast.

Implementations of the recordable medium may include one or more of the following features. The recordable layer by itself has a reflectivity R1 before application of the write power and a reflectivity R2 after application of the write power. The recordable structure and the layer of material together have a reflectivity R3 before application of the write power and a reflectivity R4 after application of the write power, and |R4 - R3| > |R2 - R1|. The recordable structure has a thickness less than 20 nm.

In another aspect, in general, a recordable medium includes an inscription layer and at least one contrast inverting layer. The inscription layer has at least a first sub-layer and a second sub-layer that combine upon application of a write power. The inscription layer has a reflectivity R1 with respect to a read beam before application of the write power and a reflectivity R2 after application of the write power, and R1 < R2. The at least one contrast inverting layer does not combine with the first and second sub-layers of the inscription layer upon application of the write power. The at least one contrast inverting layer and the inscription layer together have a reflectivity R3 before application of the write power and a reflectivity R4 after application of the write power, and R3 > R4.

Implementations of the recordable medium may include one or more of the following features. The contrast inverting layer has a transmissivity with respect to the read beam that is greater than 50% . The contrast inverting layer has a thickness less than 20 nm. The inscription layer has a thickness less than 20 nm. At least one of the first and second sub-layers has a thickness less than 10 nm. Before inscription, the contrast inverting layer and the two sub-layers form a micro-resonant structure, and after inscription, the combining of the first and second sub-layers destroys the micro-resonant structure. The micro-resonant structure has an overall reflectivity $R_{sum}$ that is greater than $R1 + T1^2 * T2^2 * R3$, R1 being the reflectivity of the contrast inverting layer. R2 is the reflectivity of first sub-layer, R3 is the reflectivity of the second sub-layer, T1 is the transmissivity of the contrast inverting layer, and T2 is the transmissivity of the first sub-layer. The first sub-layer is positioned between the contrast inverting layer and the second sub-layer.

The at least one contrast inverting layer includes at least a first contrast inverting layer and a second contrast inverting layer, in which the inscription layer is positioned between the first and second contrast inverting layers. The at least one contrast inverting layer includes at least a first contrast inverting layer (L1), a second contrast inverting layer (L2), a third contrast inverting layer (L3), and a fourth contrast inverting layer (L4). Before inscription, the layers L1 and L4 have reflectivities greater than the layers L2 and L3 and the sub-layers, such that the layer L1, the layer L2, the first sub-layer, the second sub-layer, the layer L3, and the layer L4 together form a first micro-resonant structure. After inscription, the inscription layer has a reflectivity that is greater than the layers L2 and L3, such that the first micro-resonant structure is destroyed and second and third micro-resonant structures are formed. The second micro-resonant structure includes the layers L1 and L2 and the inscription layer. The third micro-resonant structure includes the inscription layer and the layers L3 and L4. The first and second sub-layers include at least one of (a) two different semiconductor layers, (b) two different metal layers, (c) two different dielectric layers, (d) one semiconductor layer and one metal layer, (e) one semiconductor layer and one dielectric layer, and (f) one metal layer and one dielectric layer.

In another aspect, in general, an optical disc includes an inscription layer having at least two sub-layers that combine upon application of a write power. The inscription layer has a reflectivity R1 with respect to a read beam before application of the write power and a reflectivity R2 after application of the write power, and R1 < R2. The optical disc also includes a contrast inverting layer that does not combine with the sub-layers of the inscription layer upon application of the write power. The contrast inverting layer and the inscription layer together have a reflectivity R3 before application of the write power and a reflectivity R4 after application of the write power, and R3 > R4.

Implementations of the optical disc may include one or more of the following features. The reflectivities R3 and R4 comply with at least one of a CD-R, DVD-R, DVD+R, double layer DVD+R, double layer DVD-R, Blu-ray Disc, and HD-DVD standard. The contrast inverting layer has a thickness less than 20 nm. The inscription layer has a thickness less than 20 nm. At least one of the sub-layers has a thickness less than 10 nm. The sub-layers include at least one of (a) two different semiconductor layers, (b) two different metal layers, (c) two different dielectric layers, (d) one semiconductor layer and one metal layer, (e) one semiconductor layer and one dielectric layer, and (f) one metal layer and one dielectric layer.

In another aspect, in general, a recordable medium includes a recordable structure having a first layer and a second layer, each of the first and second layers having one or more sub-layers. The first and second layers generate a first optical contrast upon application of an energy, the first optical contrast being opposite to a second optical contrast that would have been generated by the first layer alone when the energy is applied to the first layer.

Implementations of the recordable medium may include one or more of the following features. The first layer alone has a reflectivity with respect to a read beam that increases upon application of the energy, and the first and second layers together have a reflectivity that decreases upon application of the energy. At least one of the sub-layers has a thickness less than 10 nm. The second optical contrast is associated with an increase in reflectivity with respect to a read beam.

In another aspect, in general, a recordable medium includes a first recordable structure, a second recordable structure, and a spacer layer positioned between the first and second recordable structures. The first recordable structure has a transmissivity with respect to a read beam that increases upon application of a write power to the first recordable structure. The second recordable structure has an optical property that changes upon application of a write power to the second recordable structure.

Implementations of the recordable medium may include one or more of the following features. The reflectivity of the first recordable structure decreases by at least 16% after application of the write power to the first recordable structure. The transmissivity of the first recordable structure is greater than 55% before and after application of the write power to the first recordable structure. At least one of first and second recordable structures has a thickness less than 10 nm. The transmissivity of the second recordable structure increases after application of the write power to the second recordable structure.

In another aspect, in general, an optical disc includes a first recordable structure, a second recordable structure, and a spacer layer positioned between the first and second recordable structures. The first recordable structure has a transmissivity with respect to a read beam that increases upon application of a write power to the first recordable structure. The second recordable structure has an optical property that changes upon application of a write power to the second recordable structure.

Implementations of the optical disc may include one or more of the following features. Optical characteristics of the first and second recordable structures comply with at least one of double layer DVD+R and double layer DVD-R standard. At least one of first and second recordable structures has a thickness less than 10 nm.

In another aspect, in general, a recordable medium includes a first recordable structure, a second recordable structure, and a spacer layer positioned between the first and second recordable structures. The first recordable structure has a layer of first material and a layer of second material that combine to form a layer of third material upon application of a write power to the first recordable structure. The layer of third material has an optical property with respect to a read beam that is different from the overall optical property of the layer of first material and the layer of second material before application of the write power. The second recordable structure has an optical property that changes upon application of a write power to the second recordable structure.

Implementations of the recordable medium may include one or more of the following features. The reflectivity of the first recordable structure decreases after application of the write power to the first recordable structure. The reflectivity of the first recordable structure decreases by at least 16% after application of the write power to the first recordable structure. The transmissivity of the first recordable structure is greater than 55% before and after application of the write power to the first recordable structure. The transmissivity of the first recordable structure increases after application of the write power to the first recordable structure. At least one of first and second recordable structures has a thickness less than 10 nm. The sub-layers include at least one of (a) two different semiconductor layers, (b) two different metal layers, (c) two different dielectric layers, (d) one semiconductor layer and one metal layer, (e) one semiconductor layer and one dielectric layer, and (f) one metal layer and one dielectric layer.

In another aspect, in general, a recordable medium for use in an optical system includes a first recordable structure, a second recordable structure, and a spacer layer positioned between the first and second recordable structures. The first recordable structure has a first layer and a second layer, each of the thicknesses of the first and second layers being less than a Debye length determined based on a charge carrier density in the layer. The second recordable structure has an optical property with respect to a read beam that changes upon application of a write power to the second recordable structure.

In another aspect, in general, a recordable medium that is suitable for use in an optical system having pre-stored information related to a write strategy that is associated with an identifier for identifying the recordable medium. The system uses the write strategy to write information on the identified recordable medium. The recordable medium includes a first recordable structure, a second recordable structure, and an identifier for identifying the recordable medium. The first recordable structure has a transmissivity with respect to a read beam that increases when a write power is applied to the first recordable structure. The second recordable structure has an optical property that changes when a write power is applied to the second recordable structure. The first and second recordable structures are spaced apart along a direction normal to a surface of the first recordable structure.

In another aspect, in general, a data storage medium includes a first recordable structure, a second recordable structure, and a spacer layer disposed between the first and second recordable structures. The first recordable structure has blank regions and inscribed regions, in which information is carried by the presence or absence of inscription, the inscribed regions having transmissivity with respect to a read beam that is higher than blank regions. The second recordable structure has blank regions and inscribed regions that have measurable different optical properties.

In another aspect, in general, an apparatus includes a first recordable structure, a second recordable structure, a third recordable structure, a first spacer layer, and a second spacer layer. The first recordable structure has a transmissivity with respect to a read beam that increases upon application of a write power to the first recordable structure The second recordable structure has a transmissivity with respect to a read beam that increases upon application of a write power to the second recordable structure. The third recordable structure has an optical property that changes upon application of a write power to the third recordable structure. The first spacer layer is positioned between the first and second recordable structures, and the second spacer layer is positioned between the second and third recordable structures.

In another aspect, in general, a method of writing information in a recordable medium includes applying a write power to a first recordable structure to increase a transmissivity of the first recordable structure with respect to a read beam. The method also includes applying a write power to a second recordable structure to change an optical property of the second recordable structure with respect to the read beam, including passing a write beam through the first recordable structure to apply the write power to the second recordable structure.

Implementations of the method may include one or more of the following features. The read beam has a wavelength between 350 nm and 450 nm. The first recordable structure includes a layer of first material and a layer of second material, and upon application of the first energy, the layer of first material and the layer of second material combine to generate a layer of third material. The layer of third material has a characteristic frequency that is less than the frequency of the read beam, and at least one of the layer of first material and the layer of second material has a characteristic frequency that is higher than the read beam. The characteristic frequency of a layer is proportional to the square root of $n/m$, in which $n$ represents the charge carrier density of the layer and $m$ represents effective mass of the charge carriers in the layer. The characteristic frequency includes a plasma frequency.

In another aspect, in general, a method of reading information from a recordable medium includes focusing a read beam on a first recordable structure to detect a first portion having a reflectivity that is lower and a transmissivity that is higher than a second portion, the first and second portions being part of the first recordable structure. The method includes passing the read beam through the first recordable structure and focusing the read beam on a second recordable structure to detect a third portion having an optical property that is different from a fourth portion, the third and fourth portions being part of the second recordable structure.

In another aspect, in general, an optical system includes a recordable medium and an optical drive. The recordable medium includes a first recordable structure having a transmissivity with respect to a read beam that increases upon application of a write power to the first recordable structure, and a second recordable structure having an optical property that changes upon application of a write power to the second recordable structure. The optical drive includes a light source to generate the read beam, a focusing mechanism to focus the read beam on the first recordable structure or the second recordable structure, and a light detector to detect light reflected from the recordable medium.

In another aspect, in general, an optical system includes a recordable medium and an optical drive. The recordable medium includes a first recordable structure having a transmissivity with respect to a read beam that increases when a write power is applied to the first recordable structure, and a second recordable structure having an optical property that changes when a write power is applied to the second recordable structure. The optical drive is adapted to record data in the recordable medium and has pre-stored information related to a write strategy for writing data to the recordable medium.

In another aspect, in general, an optical disc drive includes pre-stored information that identifies whether an optical disc belongs to a group of disc that includes a first recordable structure and a second recordable structure. The first recordable structure has a transmissivity with respect to a read beam that increases when a write power is applied to the first recordable structure. The second recordable structure has an optical property that changes when a write power is applied to the second recordable structure.

An advantage of using a recordable structure having two or more thin layers is that less energy is required for inscribing the recordable structure, because only a small amount of energy is used to cause the thin layers to combine. Because the layers are thin, less materials for the layers are required, thereby reducing the manufacturing costs.

An advantage of using an inscription layer that increases transmissivity after inscription is that, when the inscription layer is used in multi-inscription-layer recordable discs, such as DVD+R DL, more light can be used in writing or reading data recorded in second, third, or additional inscription layers and not be interfered by the data region that were recorded at the front layers. This property is advantageous in comparison to the organic dye based inscription layers, which changes from more transparent to more opaque during inscription and interferes with the light passing down to the next layer.

In a multi-inscription-layer recordable disc that uses thin layers, the transmissivity of each inscription layer can be greater than 60% both before and after inscription, so that more than 60% of the incoming light can reach the second inscription layer, and more than 36% of the incoming light can reach the third inscription layer, and so forth (assuming that the spacer layers are highly transparent). Thus, a higher percentage of the incoming light can be used to write data to or read data from the second and third inscription layers.

In some examples, the inscription process is endothermic, so that the inscribed regions are well-defined (that is, the heat will not spread out causing the mark to be larger than the laser beam spot at the inscription layer). An advantage of using an endothermic reaction to form inscription marks is that the inscribed marks can be made smaller, resulting in a higher recording density (as compared to recording processes that use exothermic reactions, such as those used for inscription layers having organic dyes).

An advantage of using a contrast inverting layer is that a greater variety of materials can now be used for designing inscription layers. For example, an optical disc having an inscription layer that increase reflectivity after inscription does not meet the specifications for CD or DVD type recordable media (which requires that the reflectivity decreases after inscription). When a contrast inverting layer is added to the optical disc to invert the contrast so that reflectivity decreases after inscription, the optical disc may be able to meet the specifications of CD or DVD type recordable media (assuming other criteria are also met).

An advantage of using a contrast enhancement layer is that a greater variety of materials can now be used for designing inscription layers. For example, an inscription layer by itself may not have sufficient optical contrast to meet the requirements for CD or DVD type recordable media. When the inscription layer is used together with a contrast enhancement layer to increase optical contrast, an optical disc that includes both the inscription layer and the contrast enhancement layer may be able to meet the specifications of CD or DVD type recordable media (assuming other criteria are also met).

An advantage of using micro-resonant structures is that a greater reflectivity or transmissivity can be achieved using thin layers. Optical contrast can be generated by modifying (for example, creating, destroying, or splitting) the micro-resonant structures, so that a higher optical contrast can be achieved.

A number of publications, patent applications, and other references have been incorporated by reference. In case of conflict with the references incorporated by reference, the present specification, including definitions, will control.

Description of Drawings

FIG. 1A is a schematic diagram showing a recordable disc being written.

FIG. 1B is a schematic diagram showing a recordable disc being read.

FIGS. 2A to 2C show cross-section of a recordable disc.

FIG. 3 is a flowchart for designing an inscription layer having two layers.

FIG. 4A to 4C, 5A, 5B, 6A to 6D, 7, 8A to 8C, and 9 to 13 show cross sections of recordable discs.

FIGS. 14A and 14B are graphs of reflectivity as a function of thickness.

FIGS. 15 to 24 show cross sections of inscription layers.

Description

1 Optical recording system

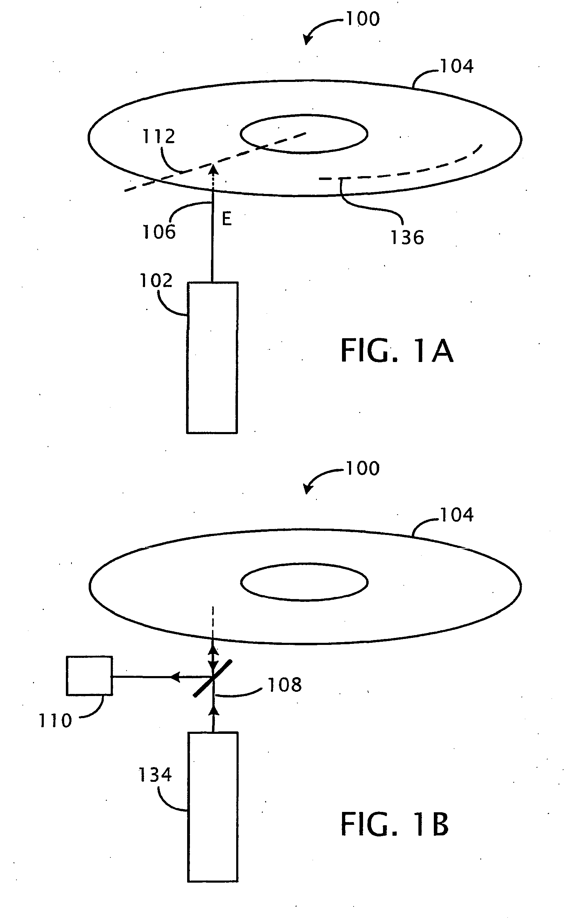

Referring to FIG. 1A, in an example of an optical recording system, data is written to a recordable disc 104 by applying energy to an inscription layer in the recordable disc 104. The energy is applied using a write beam 106, which can be a laser beam emitted from a semiconductor laser diode 102. The energy induces a change in an optical property of the inscription layer of the disc, in this case resulting in a change in overall reflectivity of the disc as a whole (i.e., at the external surface of the disc at which a read beam is incident) with respect to the read beam.

Referring to FIG. 1B, when reading the data recorded on the recordable disc 104, a read beam 108, which can be a laser beam emitted from a semiconductor laser diode 134, is focused on the inscription layer, and a photo detector 110 detects the read beam reflected from the recordable disc 104. Because the amount of reflected light is different between regions that have been inscribed versus those that have not, the recorded data are read from the disc 104 by detecting differences in the reflected light. The write beam 106 and the read beam 108 can have the same or different wavelengths. The laser(s) 102 can be one common laser, and are typically part of an optical pickup head.

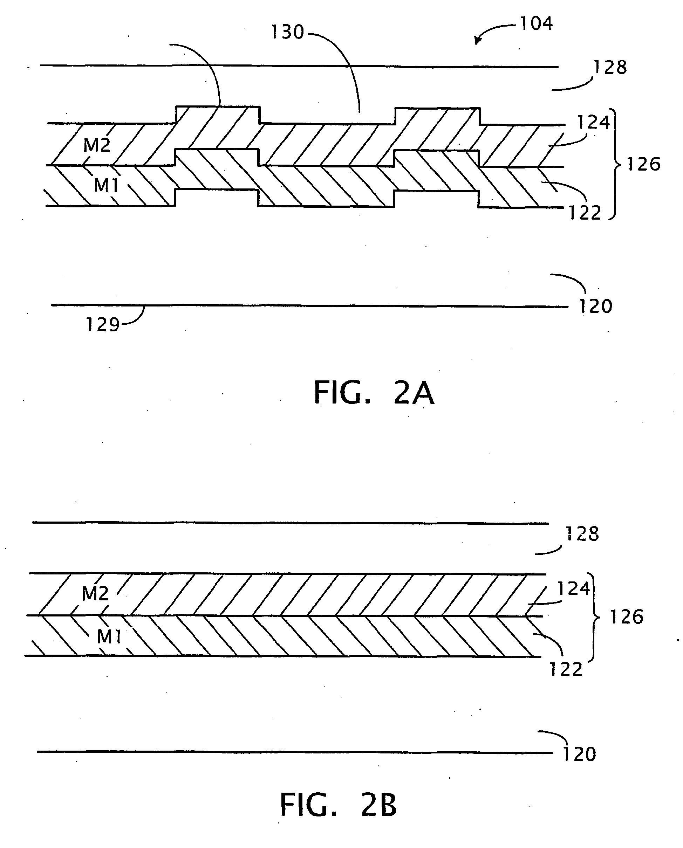

FIG. 2A shows a cross section of one version of the recordable disc 104 along a radial direction 112 (FIG. 1A). The disc 104 includes a transparent substrate 120, a recordable structure - an inscription layer 126, and a protective layer 128. The read and write beams enter the disc 104 from the side of the substrate 120.

In this version of the disc 104, the inscription layer itself is reflective before inscription. That is, a read beam 108 passes through the transparent layer 120, and is reflected back towards the source by the inscription layer 126. In regions that have been inscribed, the inscription layer 126 is relatively transmissive, and the read beam 108 is relatively less reflected by the inscription layer 126, and largely passes through the inscription layer 126 to the protective layer 128, where the read beam 108 is absorbed, passes through the disc 104, or is otherwise prevented from reflecting strongly back through the inscription layer 126.

The inscription layer is made up of thin sub-layers made of different materials. In this version of the disc 104, the inscription layer 126 includes a first layer 122 of material M1 and a second layer 124 of material M2. In this version of the disc 104, the first layer has a thickness of less than the Debye length of M1, for example, 10 nm, and the material M1 is, for example, impurity doped silicon. The second layer has a thickness of less than the Debye length of M2, for example, 15 nm, and the material M2 is, for example, germanium. The transparent substrate 120 and the protective layer 128 are composed of glass or polycarbonate.

A variety of manufacturing approaches can be used to fabricate the thin sub-layers of the inscription layer on the disc 104. For example, each layer can be formed on top of the previous layer by physical vapor deposition (PVD), chemical vapor deposition (CVD), plasma enhanced chemical vapor deposition (PECVD), metal organic chemical vapor deposition (MOCVD), or molecular beam epitaxy (MBE).

The disc 104 includes groove tracks 130 and land tracks 132 that have different reflectivities with respect to the read beam 108 due to their different heights relative to the substrate 120 (light focused at one height may become defocused at another height). Data can be written in the groove track 130 only, in the land track 132 only, or in both the groove and land tracks, for example, depending on the recording standard being used. The tracks can also provide guidance to the optical pickup head so that the write and read beams can focus correctly on particular regions and radiuses on the disc 104.

The pickup head moves along a radial direction of the disc 104 so that the read and write beams can be positioned on any track on the disc 104. The disc 104 spins via a spindle motor (not shown) so that the read and write beams scan the tracks as the disc 104 rotates.

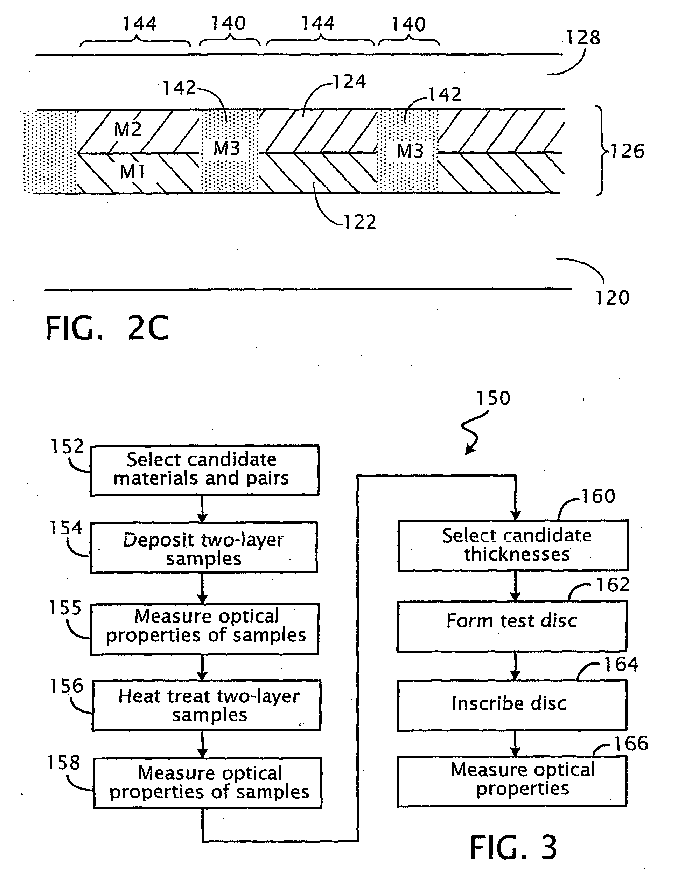

FIG. 2B shows a cross section of the disc 104 along a lengthwise direction 136 (see FIG. 1A) along a track. FIG. 2C shows the same cross section after inscription. During a write process, the write beam 106 scans the track and is focused on the inscription layer 126. The power level of the laser beam 106 is modulated according to write data (i.e., data to be written on the disc). The inscription layer is sufficiently absorptive such that the write beam provides thermal energy to the inscription layer in regions to be inscribed (for example, the write data represents "1"). The thermal energy increases the temperature of the inscription layer 126, causing the materials M1 and M2 to interact (for example, in an endothermic reaction) to form a layer 142 of material M3 that has an optical property different from the optical property of the layers 122 and 124 before inscription. The layer 142 represents a recorded mark, and is generally confined to a region in which the absorbed energy of the write beam is above a threshold spatial power density, and also, the absorbed energy of the write beam is above a threshold spatial energy density (i.e., to have enough power level and enough duration time of high-power-on).

The phrase "reflectivity of layers A and B" means the reflectivity of layers A and B considered as a whole, in which A and B are individual layers that have not combined as part of an inscription process. Similarly, the phrases "transmissivity of layers A and B" or "optical property of layers A and B" refer to the transmissivity or optical property, respectively, of layers A and B considered as a whole, in which A and B are still individual layers that have not combined as part of an inscription process.

In one example, writing is accomplished by applying a laser beam of wavelength 655 nm with power level of less than 30 mW (on the spot focused on the inscription layer) when the disc is rotated at 2.4X speed, and with power level of less than 40 mW on the spot at 4X speed. The first layer 122 absorbs approximately 20% or less of the beam energy, and the second layer 124 absorbs about the same amount of energy, but more in percentage. After the write light passes through the first layer 122, the total light energy is reduced, so the absorption percentage at the second layer 124 become bigger, although the amount of energy absorbed by the layers 122 and 124 are about the same.

As introduced above, the transparent layer 120 passes a read beam 108 to the inscription layer 126 without substantial reflection at the air/layer 120 interface 129 (about 3-5%) and without substantial absorption as the beam 108 passes through the layer 120 (about 3-5%). Also, the protective layer 128 does not provide substantial reflection of the read beam 108 that passes through the inscription layer 126. Therefore, reflectivity properties of the disc 104 as a whole are determined essentially by reflectivity properties of the inscription layer 126.

When focused on this inscription layer, the layers 120, 122, 124, and 128 together have a reflectivity R1 and a transmissivity T1 with respect to the read beam 108. The layers 120, 142, and 128 together have a reflectivity R2 and a transmissivity T2 with respect to the read beam 108. In this example, materials and thicknesses of the layers 122 and 124 are selected so that R1 > R2 and T1 < T2. Specifically, at the wavelength 655 nm of the read laser, R1 = 17%, R2 = 7%, T1 = 62%, and T2 = 73%. Here, R1 > 16% and the optical contrast modulation (R1 - R2)/R1 > 60%. When the read beam 108 scans the track, the amount of light reflected by the recordable layer 126 varies depending on whether the read beam 108 is focused on a portion 144 (having materials M1 and M2), in which the read beam 108 largely reflects from the inscription layer 126, or a portion 140 (having material M3), in which the read beam 108 passes through the inscription layer 126 with an additional 10% (as compared to the portion 144), the amount of light passing either the portion 140 or 144 being not less than 60%, the inscription layer 126 providing relatively lower reflection. The variation in reflectivity is detected, thereby reading data previously recorded by the write beam 106.

The inscription layer 126 (as well as its constituent layers 122 and 124) is thin. For example, the inscription layer is substantially thinner than typical organic dye layers of conventional recordable discs. The layer 126 is also thin relative to the wavelength of the read laser. For example, the layer 126 is a small fraction of the wavelength. In the version of the disc 104 discussed above, the layer 126 is 25 nm while the wavelength of the read laser is 658 nm, and therefore the layer is less that 1/26 of the wavelength of the read beam 108.

## 2 Theory

Without being limited by any theory presented herein, behavior of recordable layers having thin sub-layers may be at least partially understood according to the following. Two parameters characterizing the materials of the recordable layer can be useful to predict or explain the behavior of such recording approaches. One parameter relates to a threshold frequency, which is referred to as the "plasma frequency," such that at above this frequency a material is substantially transparent, while below this frequency the material is substantially reflective or absorptive. Another parameter is the Debye length of a material, which relates generally to the distance in the material to which the applied charges or fields have effect.

The EM waves can propagate through a thick (bulk) material only when the frequency of the EM wave is higher than the plasma frequency of the material. If the frequency of the EM wave is lower than its plasma frequency, the radiation will be reflected and/or absorbed by the material. When the frequency of the EM wave is higher than the plasma frequency, the EM wave is absorbed when the frequency matches the quantum absorption frequencies. Other than this condition, the material becomes very transparent to the EM wave. When the thickness of a material is smaller than its Debye length, the material is partially transparent to EM waves.

Generally, changes in reflectivity and/or transmissivity through the inscription process can at least partially be explained by changes in plasma frequencies (relative to the read beam frequency) of the materials involved before and after inscription. Also, the combination of materials during inscription is aided by the strong electric field created in the charges moved across the interface between M1 and M2, and the thinness of the recording layer relative to the Debye length of the materials in the recordable layer. Furthermore, low absorption within the recordable layer after the inscription process may also be related to the thinness of the layer relative to the even longer Debye length of the material (M3) created after the inscription.

2.1 Plasma frequency

The plasma frequency of a material is a parameter that provides a threshold frequency above which an electromagnetic field propagates within a thick (bulk) material. For example, when the frequency of the read beam 108 is substantially greater than the plasma frequency of a material, the read beam 108 can propagate in the material, so that the material appears substantially transparent to the read beam 108. On the other hand, if the frequency of the read beam 108 is substantially less than the plasma frequency of the material, the read beam 108 does not propagate in the material, and the material appears reflective or opaque to the read beam 108.

Each material (conductor, semiconductor, or dielectric) has a unique charge carrier density (denoted as $n$ to indicate the number of electrons or holes per cubic centimeter) and the effective mass of each charge carrier (denoted as $m$). The values of $n$ and $m$ can generally be measured through methods known in the semiconductor field, such as Hall resistance measurements. The plasma frequency of the material can be deduced from these parameters. Thus, each material has a corresponding plasma frequency.

The plasma frequency of a material depends on the dielectric constant of the material, which in turn depends on the density and effective mass of the charge carriers in the material. The plasma frequency is approximately proportional to the square root of ($n/m$), and can be approximately represented by:

$$\omega_p = \sqrt{4\pi n / m} \cdot e, \qquad\qquad \text{Equ. 1}$$

in which $e$ is the charge of the electron. The text book "Solid State Physics" by Ashcroft/Mermin (Chapter 1: The Drude Theory of Metals, pages 16-20) describes the detail derivation of Equ. 1. The EM wave with wavelength below which some alkali metals become transparent have been measured, and the measurement values approximate the theoretical values determined based on Equ. 1. See "Principles of Optics" by Born and Wolf, 6th edition, 1980, pages 624-627, herein incorporated by reference.

From Equ. 1 above, the plasma frequency increases in proportion to the square root of the charge carrier density. By changing the charge carrier density of a layer, the optical properties of the layer may change accordingly. Some materials, such as metals, have larger charge carrier densities, and thus have higher plasma frequencies. Some materials, such as semiconductors and dielectrics, have smaller charge carrier densities, and thus have lower plasma frequencies. For example, aluminum (M1) has a charge carrier density of $1.8 \times 10^{23}$ per cc, and germanium (M2) has a charge carrier density of $8 \times 10^{17}$ per cc. By intermixing or reacting two layers of materials M1 and M2 having different charge carrier densities, a resulting layer having a material M3 may have a charge carrier density $5 \times 10^{16}$ per cc (and optical property) that is different from either of the two materials M1 and M2 alone. The material M3 can either be a mixture of materials M1 and M2, or a new material that results from a chemical reaction of M1 and M2, or a sandwiching structure of a new layer (of either mixing or chemical reacted) in between M1 and M2.

In the example above, assume that $n1$, $n2$, and $n3$ are the charge carrier densities of materials M1, M2, and M3. Because $n3 < n2 < n1$, the plasma frequency of the material M3 is lower than the plasma frequencies of the materials M1 and M2: $\alpha 3 < \alpha 2 < \alpha 1$. When a read beam having a frequency $\alpha_{laser}$ is selected so that $\alpha 3 < \alpha_{laser} < \alpha 1$, the layers before the inscription will be reflective to the read beam (because $\alpha_{laser} < \alpha 1$), and the layer after the inscription will be transparent to the read beam (because $\alpha 3 < \alpha_{laser}$).

The terms "reflective" and "transparent" in this description are used in a general sense. By describing a layer as "reflective," we do not imply that the layer reflects all incoming light. A reflective layer can still transmit and absorb portions of the incoming light. By describing a layer as being reflective before inscription and transparent (or transmissive) after inscription, we mean that the reflectivity of the layer decreases and the transmissivity of the layer increases after inscription. By describing a layer as being transparent before inscription and reflective after inscription, we mean that the transmissivity of the layer decreases and the reflectivity of the layer increases after inscription.

In the example above, according to Equ. 1, the materials M1 (aluminum) and M3 (a mixture of Al and Ge) have predicted plasma frequencies $1.4 \times 10^{15}$ and $5 \times 10^{12}$, respectively. According to the theory outlined above, the material M1 would be reflective to a read beam having a frequency of $4.7 \times 10^{14}$, and the material M3 would be transparent to the read beam. Actual measurements were made on the materials M1 and M3 to determine when the materials change from more reflective to more transparent. The measured plasma frequencies for materials M1 (aluminum) and M3 (a mixture of Al, Ge, and Al-Ge) are $1.6 \times 10^{15}$ and $7 \times 10^{12}$, respectively. The reflectivity and transmissivity of the bulk material M1 to the read beam are 96% and 0%, respectively. The reflectivity and transmissivity of the bulk material M3 to the read beam are 11% and 65%, respectively. The measured optical behaviors are consistent with the theory, i.e., M1 would be more reflective and M3 would be more transparent. Thus, even though Equ. 1 is an approximation for predicting the plasma frequencies, it is useful in designing the recordable layer by selecting materials having desired optical properties.

The above description explains optical properties of thin layers of materials in terms of plasma frequency of the individual layers, in which the plasma frequency of a layer of material is determined based on the material's charge carrier density and effective charge carrier mass, both of which are measured when the material is in bulk form. The theory above is applicable to a structure that is made of multiple layers when each layer is thinner than its Debye length, provided that the "effective" values n and m are measured experimentally at this multiple layered structure.

When two thin layers are placed adjacent to one another, a difference in conduction band and/or valance band energy levels (sometimes called chemical potentials) occurs, such that charge carriers migrate from one layer to another and causes charge separation. Because the layers are thin relative to the respective Debye lengths, opposite charges are separated by a very short distance, creating a strong electric field in the two thin layers. Due to the migration of charge carriers and the strong electric field across both layers, the two layers may be seen as having an effective plasma frequency ($\alpha_{effective\_12}$) that is determined by an effective charge carrier density and an effective charge carrier mass. When the two thin layers having materials M1 and M2 are combined upon application of an external energy to form material M3, the effective density and effective mass of the charge carriers (n and m, respectively) in the layers change, thereby changing the plasma frequency. This may result in a change in the transparency or opaqueness of the recordable layer with respect to the read beam 108.

For example, if $\alpha 3 < \alpha_{laser} < \alpha_{effective\_12}$, the recordable layer 126 will change from reflective (before recording) to transparent (after recording) with respect to the read beam 108. On the other hand, if $\alpha_{effective\_12} < \alpha_{laser} < \alpha 3$, the recordable layer 126 will change from transparent (before recording) to reflective (after recording) with respect to the read beam 108. This property can be useful in providing design flexibility to shift the physical location of optical reflection.

2.2 Debye length

The Debye length of a material, which relates generally to the thickness of the cloud of charge carriers in the material that shields an applied charge or field depends on the charge carrier density. When a charged particle is placed in a material, the charged particle will attract charge carriers having opposite polarity, so that a cloud of charge carriers will surround the charged particle. The cloud of charge carriers shields the electric field from the charged particle, and the higher the charge carrier density, the greater the shielding effect within a given distance. Due to shielding by the charged particles, the electric potential φ decays exponentially according the equation

$$\varphi = \varphi_0 \cdot \exp(-|x| / \Sigma_D),$$

where $\varphi_0$ is the electric potential at the charged particle, $x$ is the distance from the charged particle, and $\Sigma_D$ is the Debye length, which can be represented by:

$$\lambda_D = \frac{1}{e}\sqrt{\frac{K \cdot T_e}{4\pi n}} \approx 6.9\sqrt{\frac{T}{n}} \; cm \;\; (T \; in \; °K). \qquad \text{Equ. 2}$$

See "Introduction to Plasma Physics," by Francis Chen, Section 1.4: Debye Shielding, pages 8-11. The Debye length represents a measure of the shielding distance or thickness of the cloud of charge carriers.

When there are fluctuations in an electric field created by changes in a localized charge density in a material, the influences of the fluctuations are mostly felt by charge carriers located within a few Debye lengths. The charge density changes can be induced by, for example, charge carriers moving through interfaces, electromagnetic waves passing through the material, or charge density fluctuations due to thermal effects. For a material that is reflective to an electromagnetic wave, a large percentage of the reflection of the electromagnetic wave takes place within a few Debye lengths from the incident surface. For a material this is absorptive to an electromagnetic wave, a large percentage of the electromagnetic wave is absorbed or converted to heat within a few Debye lengths.

When two materials having different electron energy levels (such as different highest unoccupied electron energy level, called conduction band, or HUMO, and lowest occupied electron energy level, called valance band, or LOMO) contact, charge separation will cause an electric field to be generated at the interface. The influence of the electric field is shielded or reduced by a sheath of charge carriers near the interface. When the two materials are thin layers, for example, the total thickness of the thin layers is less than the Debye length, there will be a strong electric field throughout the entirety of the two layers, which can be as strong as 100,000 V/cm. The strong electric field can assist the materials in the two layers to interact and combine upon an energy application (such as energy from a write beam). By comparison, when the layers are thick, the electric field in most of the cross-section of the layers is negligible and does not provide assistance in the interaction of the materials in the two layers.

The same principle can be applied to the interaction or combination of three or more thin layers of materials.

For semiconductors, $n$ is about $10^{17}$ to $10^{19}$, its square root is about $3 \times 10^8$ to $3 \times 10^9$, and $T$ is about 300 °K at room temperature, so the Debye length is about 10 to 100 nm. For metals, $n$ is about $10^{21}$ to $10^{23}$, so the Debye length is about 1 to 10 nm. For example, the Debye length for aluminum is less than 1 nm at room temperature, and is about 2 nm at 700 °K. The Debye length for Ge doped with impurities is about 30 nm to 80 nm at room temperature, depending on the concentration of impurities.

A feature of a recordable layer having thin layers is that the large electric field can assist endothermic reaction, which does not release heat during the reaction. Only a small area power density is required to cause the combination of the two layers. The recording mark is well defined because only the portion of the two layers exposed to the higher level write beam, above an absorbed threshold spatial power density, and also above an absorbed threshold spatial energy density (i.e., to have enough power level and enough duration time of high-power-on), will combine. Because a smaller area power density is required, the write speed can be increased, or the laser writing power can be decreased.

When there is a strong electric field, there is an electric potential across the interface, so a small amount of energy can cause the molecules to move across the interface (from a higher potential region to a lower potential region), causing materials from the two layers to intermix.

By comparison, without the large electric field, a larger power per unit volume could be required to induce an endothermic reaction. In conventional recordable discs using organic dyes, a high area power density is used to heat organic dyes to cause dissociation or oxidization, which are exothermic reactions. The size of the recording mark is determined by how far the heat wavefront spreads before cooling off. Thus, the recording marks may not be well defined. For two thick layers of materials that do not interact in an exothermic reaction, one way to combine the two materials without the assistance of a strong electric field is to heat the materials to their melting points to allow the materials to intermix due to Brownian motion. Such reactions require much higher power and energy density.

Another feature of a recordable layer having thin layers is that the thin layers can have a reduced rate of oxidization. For example, when aluminum is exposed to air, a layer of aluminum oxide having a thickness of about 3-7 nm will form at the surface. If a thin layer of aluminum, for example, 5 nm, is deposited on another thin layer of material, the thin layer of aluminum may be inhibited from oxidizing due to the strong electric field formed by the charge separation described above.

## 3 Selecting materials

In the example of a recordable layer described in Section 1, materials M1, M2, and M3 are silicon, germanium, and a mixture of Si, Ge, and Si-Ge, respectively. Alternative materials can be used to achieve similar effects. A material selection approach is based on multiple steps in which materials are first identified based in part on theoretical considerations, then empirical measurements of the materials themselves are made, and then empirical measurements of a recordable disc having a recordable layer fabricated with particular materials (and thicknesses) are made.

In general, the thicknesses of each layer (for example, 122 and 124) in the recordable layer 126 ranges from a fraction of the Debye length for that layer to a few multiples of the Debye length. The overall thickness of the recordable layer is generally selected to be at most a few multiples of an effective Debye length of the layers considered together. As discussed above, having a thin thickness for the recordable layer 126 allows a strong electric field to be generated in the recordable layer 126 to facilitate combination of the layers (for example, 122 and 124) during the inscription process.

If a recordable disc is to be used in standard recording and reading devices, the layers need to have reflective properties that meet the disc standards. For example, DVD+R and DVD-R discs require that the initial reflectivity (before inscription) is not less than 45%. Without a strong interface electric field, for a two-layer structure in which only one sub-layer is reflective to meet the requirement that the reflectivity is not less than 45%, the thickness of the reflective sub-layer should be greater than its Debye length. If the layer is too thin, a large portion of the read beam will pass through the layer without being reflected. Double layer DVD+R or DVD-R discs require that the initial reflectivity is not less than 16%. Thus, for double layer DVD discs, the recordable layer 126 can be made thinner.

The charge separation can cause the charge carriers to move to a layer of lower carrier density, which alters the reflectivity from non-reflection to very reflective. The large electric field can also alter the EM wave propagation through the interfaces. With the help of a strong interface field, the energy required for the interaction between the thin layers is reduced. Thus, when each of the layers has a thickness that is equal to or less than its Debye length, even though the amount of energy absorbed is reduced, that amount of energy is sufficient to cause reaction between the two thin layers.

A further consideration is that the layers need to have sufficient thickness and absorption characteristics to absorb enough energy of a write beam to cause the two layers of materials M1 and M2 to combine to form the third layer of material M3. If the recordable layer 126 is too thin, a large portion of the write beam will pass through the recordable layer 126 and not be absorbed.

FIG. 3 shows an example of a process 150 for designing the two layers 122 and 124 (FIG. 2B) for a first layer of DVD+R DL disc. Candidate materials M1 and M2 for the layers 122 and 124 are selected 152 by finding a pair of materials in which at least one material is reflective with respect to (and has a plasma frequency higher than) the read beam 108, and that the pair of materials is predicted to combine to form a material M3 that is transparent with respect to (and has a plasma frequency lower than) the read beam. After candidate materials M1 and M2 have been decided, empirical properties are determined as follows.

Measurement of optical properties makes use of various combinations of sub-layer thicknesses deposited on a small glass substrate. Multiple identical copies of such a sample are made, and are processed in different heat environments. For example, five thicknesses of each of the two layers - twenty-five combinations - are deposited on each of the glass substrates, and eight copies of each combination are made. This yields a total of two hundred samples for a particular candidate pair. The reflectivity and transmissivity values are measured 155 over a spectrum of wavelengths, for example, from 190 nm to 1000 nm prior to further processing.

The eight copies of the sample are placed on a wafer and heated 156 in a heating chamber, with inert gas flowing through the heating chamber. The samples are retrieved from the heating chamber at different times. Different heating periods represent different powers applied to the two layers, and provide information that can be used in determining how much laser power is necessary to cause the two layers to combine.

The reflectivity and transmissivity values are measured 158. The twenty-five reflectivity and transmissivity values measured before heating are compared with the two hundred reflectivity and transmissivity values measured after heating. Desirable combinations of thicknesses is selected 160 by finding the candidates passing contrast and/or other necessary requirements with respect to the read beam 108. The required write power is recorded. All of the above information can be stored in a database for later retrieval.

A particular combination of layer thicknesses is then evaluated with a test disc that is formed 162, and data is inscribed 164 on the disc. The marks formed on the test disc are examined under a microscope. Optical properties of the disc are measured 166, including the reflectivities and transmissivities of the portions of the disc with and without data, and accuracy of signals read from the test disc. For example, the candidate materials selected in step 152 are determined to be suitable for the layers 122 and 124 of DVD+R DL discs if the measurement results from step 166 comply with the standard.

4 Optical properties of two thin layers

In the example described in Section 1, the recordable layer 126 has two layers 122 and 124 that are selected such that the layers 122 and 124 together are reflective to the read beam 108 prior to inscription, and after inscription changes to transparent with respect to the read beam, resulting in an optical contrast associated with a reduction in reflectivity of the disc after inscription. Other configurations for the two layers 122 and 124 are also possible, including two layers that increase reflectivity with respect to the read beam, or change the position of reflection, after inscription.

Generally, in designing a recordable layer having two thin layers, it is useful to select the materials of the layers by taking account of the plasma frequencies of the materials relative to the frequency of the read beam 108. For example, below are four categories of recordable layers 126 having two thin layers 122 and 124. In the categories 1, 2, and 3, the two layers 122 and 124 (having materials M1 and M2) combine to form a third layer of material M3 upon application of a write power. In the category 4, the two layers 122 and 124 partially combine to form a third layer of material M3 upon application of a write power. The read laser light strikes M1 first and then M2.

Here, the term "write power" refers to a laser power level sufficient to record a mark in the recordable layer 126. In the discussion below, $\alpha_{laser}$ is the read beam frequency, and $\alpha1$, $\alpha2$, and $\alpha3$ are the plasma frequencies of materials M1, M2, and M3, respectively.

Category 1: This category is characterized by the fact that $\alpha3 < \alpha_{laser}$. That is, $\alpha3 < \alpha_{laser} < \alpha2 < \alpha1$, $\alpha3 < \alpha2 < \alpha_{laser} < \alpha1$, $\alpha3 < \alpha_{laser} < \alpha1 < \alpha2$, or $\alpha3 < \alpha1 < \alpha_{laser} < \alpha2$. In this category, after application of a write power, the recordable layer 126 changes from more reflective to more transparent with respect to the read beam 108, or from having a higher reflectivity to a lower reflectivity. In this category, after inscription, the reflectivity (R) decreases while the transmissivity (T) increases. Here, R and T refers to the reflectivity and transmissivity of the recordable layer 126, not those of the entire disc 104.

The example of recordable layer 126 described in Section 1 belongs to this category.

By increasing T after inscription, more light can pass through the recordable layer 126 after inscription. As is discussed further in the following sections, this property can be useful in multi-inscription-layer recordable discs, such as DVD+R DL, to allow more light to be used in writing or reading data recorded in second, third, or additional recordable layers and not be interfered by the data region that were recorded at the front layers.

Category 2: This category is characterized by the fact that $\alpha_{laser} < \alpha3$. That is, $\alpha2 < \alpha1 < \alpha_{laser} < \alpha3$, $\alpha1 < \alpha_{laser} < \alpha2 < \alpha3$, or $\alpha1 < \alpha2 < \alpha_{laser} < \alpha3$. In this category, after application of a write power, the recordable layer 126 changes from more transparent to more reflective with respect to the read beam 108. In this category, after inscription, R increases while T decreases.

Some examples of the categories 1 and 2 above are also characterized by the fact that the absorption (A) does not change very much after recording (for example, absorption increases or decreases by less than 10%). Thus, there is a trade-off between R and T in the inscription process. By comparison, in conventional recording methods such as those using organic dyes, the trade-off is between A and T, by increasing A and reducing T after inscription, more light is prevented from being reflected back from a reflecting metal layer behind the dye layer, thereby reducing the overall reflectivity of the disc.

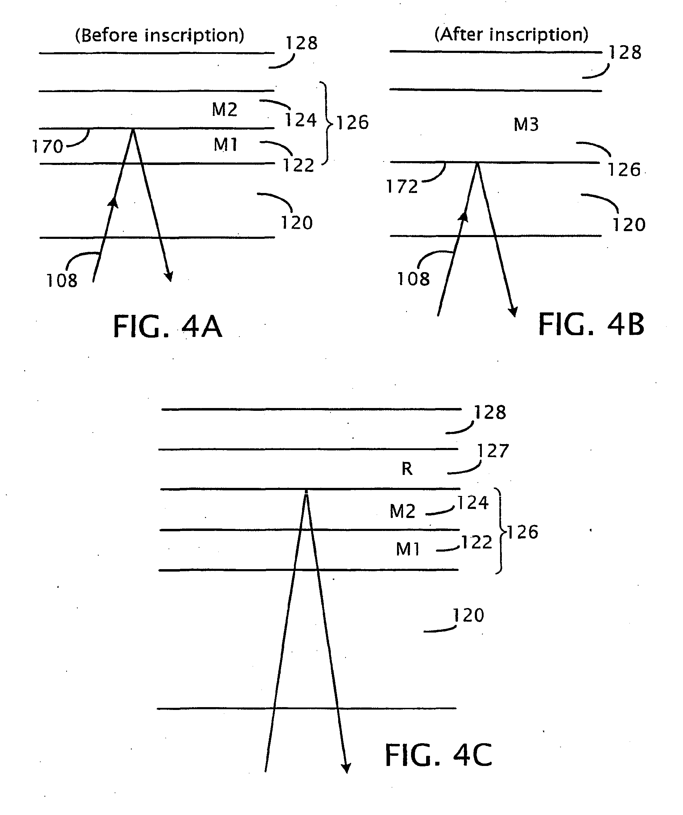

Category 3: This category is characterized by the fact that $\alpha1 < \alpha_{laser} < \alpha3$. That is, $\alpha1 < \alpha_{laser} < \alpha3 < \alpha2$, $\alpha1 < \alpha2 < \alpha_{laser} < \alpha3$, or $\alpha1 < \alpha_{laser} < \alpha2 < \alpha3$. In this category, the material M1 is transparent to the read beam 108, whereas the materials M2 and M3 are reflective to the read beam 108. Referring to FIG. 4A, in one example in which $\alpha1 < \alpha_{laser} < \alpha3 < \alpha2$ or $\alpha1 < \alpha_{laser} < \alpha2 < \alpha3$, before inscription, the read beam 108 passes through the material M1 and is reflected by the material M2. Referring to FIG. 4B, after inscription, the material M3 is formed, which reflects the read beam 108. In this example, the read beam 108 is reflected by a portion of the recordable layer 126 before inscription, and reflected by the entire thickness of the inscription layer 126 after inscription. Comparing FIGS. 4A and 4B, combining the materials M1 and M2 to form the material M3 has the effect of shifting the position of reflection by a distance that is equal to the thickness of the layer 122 of material M1. The reflection surface is shifted from the interface 170 between layers 122 and 124 to the interface 172 between the recordable layer 126 and the substrate 120.

Referring to FIG. 4C, in another example in which $\alpha1 < \alpha2 < \alpha_{laser} < \alpha3$, a reflective layer R 127 is placed after the layer M2 so that before inscription, the read beam 108 passes through the materials M1 and M2, and is reflected by the reflective layer R 127. Comparing FIGS. 4C and 4B, combining the materials M1 and M2 to form the material M3 has the effect of shifting the position of reflection by a distance that is equal to the entire thickness of the inscription layer 126. In the two examples above, such shifting in reflection location can be useful in recordable layers having resonant cavities, described in more detail in later sections of this description.

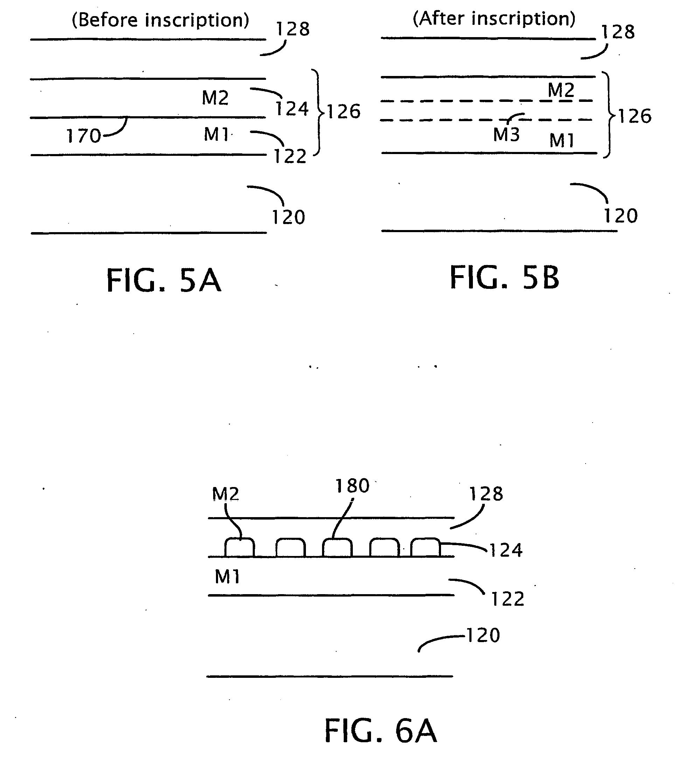

Category 4: This category is characterized by the fact that an additional layer is generated and sandwiched between M1 and M2. FIG. 5A shows an example in which the thicknesses of the layers 122 and 124, and the materials M1 and M2, are selected so that when the laser power is raised to the write power for a specified period of time, the materials M1 and M2 partially combine at the interface but do not completely combine, thus forming a third layer of material M3 that is sandwiched between materials M1 and M2. The material M3 can be, for example, formed by partial mixing, partial reaction, or partial diffusion of materials M1 and M2. Generating three layers from two layers after inscription can also be useful in recordable layers having resonant cavities.

Category 5: This category is characterized by stacking one or more additional layers in front of, or behind the inscription layer described in previous categories. This category is described in Section 7 below, which describes forming an inscription layer by combining more than one thin layer. In order to be compatible with existing commercial systems such as CD-R, DVD+R, DVD-R, and DVD+R DL disc drives, discs having the thin layers described above are designed such that their parameters satisfy the requirements specified by the systems. More complicated layered structure designs than the dual-layer nanostructure design described in this section can be used. The general principles for generating optical contrasts previously described can still be applied in these more complicated designs.

An advantage of using thin layers is that less energy is required to cause the thin layers to combine. For a given write beam having a specified power, the less energy that is required for inscription (for example, making a readable mark on the optical disc), the faster the write beam can scan across the optical disc while writing the same amount of information, resulting in a faster writing speed. Another advantage of using thin layers is that less materials for the layers is required, thereby reducing the material costs. When expensive materials are used for the layers, such as gold or silver, the cost savings for manufacturing large numbers of discs can be significant.

## 5 Materials

An approach to selection of materials is described above in Section 3. A number of different materials and types of materials are candidates for use in recording structures of the type described above.

The two layers can both be inorganic materials. One or both of the materials M1 and M2 can be metal, such as gold, copper, aluminum, tin, or silver. The materials M1/M2 can be metal/another metal, metal/metal alloy, metal alloy/another metal alloy.

The materials M1/M2 for the two layers can be metal/its oxide, metal/its nitride, metal/mixture of its oxides and/or nitrides, metal/mixture of metal, its oxides and/or nitrides, metal alloy/oxide of one component, metal alloy/nitride of one component, metal alloy/mixture of oxides and nitrides of one component, metal alloy/mixture of oxides or nitrides of more than one components, metal alloy/mixture of oxides and nitrides of more than one components, metal alloy/ mixture of metal(s), their oxides and nitrides of more than one components.

The materials M1/M2 can be metal/oxide and/or nitride of other metal, metal alloy/oxides and/or nitrides of other metals.

One or both of the materials can be semiconductors, such as silicon or germanium. The materials M1/M2 can be semiconductor/another semiconductor, semiconductor/mixture of semiconductors, mixture of semiconductors/another mixture of semiconductors, semiconductor/its oxide, semiconductor/its nitride, semiconductor/mixture of its oxides and/or nitrides, mixture of semiconductors/oxide or nitride of one component, mixture of semiconductors/ mixture of oxide and/or nitride of one component or more than one components.

One of the material M1 can be metal, and the other material M2 can be a semiconductor, or vice versa. The materials M1/M2 can be metal/semiconductor, metal alloy/semiconductor, metal/mixture of semiconductor, metal alloy/ mixture of semiconductors.

The materials M1/M2 can be metal/oxide of semiconductor, metal/nitride of semiconductor, metal/mixture of oxides and nitrides of semiconductor, metal/mixture of semiconductor with oxides and/or nitrides of semiconductor, metal/mixture of semiconductors with oxides and/or nitrides of semiconductors.

The materials M1/M2 can be metal alloy/oxide of semiconductor, metal alloy/nitride of semiconductor, metal alloy/mixture of oxides and nitrides of semiconductor, metal alloy/mixture of semiconductor with oxides and/or nitrides of semiconductor, metal alloy/mixture of semiconductors with oxides and/or nitrides of semiconductors.

The materials M1/M2 can be semiconductor/metal oxide, semiconductor/metal nitride, semiconductor/mixture of metal oxides and/or nitrides, semiconductor/mixture of metal, oxides and/or nitrides of the metal, semiconductor/ mixture of oxides of metals, semiconductor/mixture of nitrides of metals, semiconductor/oxides and/or nitrides mixture of metals, semiconductor/mixture metals, oxides, and/or nitrides of the metals, mixture of semiconductors/metal oxide, mixture of semiconductors/metal nitride, mixture of semiconductors/mixture of metal oxides and/or nitrides, semiconductor/mixture of oxides of metals, semiconductor/mixture of nitrides of metals, mixture of semiconductors/oxides and/or nitrides mixture of metals, semiconductor/mixture metals, oxides, and/or nitrides of the metals.

The materials M1 and M2 can both be dielectric materials.

## 6 Formation and combination of two thin layers

### 6.1 Continuous layers of materials

Each of the two thin layers 122 and 124 can be a continuous layer of material, which can be formed on the substrate 120 using techniques that can include, without limitation, physical vapor deposition, chemical vapor deposition, plasma enhanced chemical vapor deposition, metal organic chemical vapor deposition, or molecular beam epitaxy.

### 6.2 "Islands" of materials

As described above, a thin layer of material can be formed in a spatially continuous manner. This continuous film can be deposited on a substrate or on top of a previously deposited layer, and controlling the deposit rate and deposition time so that a desired thickness is achieved. Note that the Debye length of materials (for example, metals) having a high carrier density can be less than one nanometer at room temperature. As an alternative to the potentially difficult process of depositing a layer of material having such a small thickness, discontinuous regions or islands of materials can be deposited to achieve a desired "effective thickness." In one example, the diameters of the islands are smaller than the diameter of the read beam 108 and the write beam 106. For example, the diameters of the read and write beams are 1 micron, while the diameter of the islands are about 10 nm. Because the read and write beams does not resolve the small dimensions of the islands, the islands appear to the read and write beams as a continuous layer having the effective thickness.

Islands of materials can be formed by using techniques that can include, without limitation, physical vapor deposition, chemical vapor deposition, plasma enhanced chemical vapor deposition, metal organic chemical vapor deposition, or molecular beam epitaxy described above, but with a lower operating power, or with a shorter operating duration.

In some examples, the islands may have different sizes, and some islands may be connected. In some examples, as the material that is deposited increases, many of the islands become connected, resulting in a continuous layer of material having spaces (or holes) distributed across the layer, such that the layer of material does not completely cover or overlap the other layers.

FIG. 6A shows an example in which the layer 124 includes islands 180 of material M2 that are formed on top of a spatially continuous layer of material M1. Suppose the average thickness of the islands 180 is 5 nm, and the islands 180 cover or overlap about 15% of the layer 122, then the effective thickness of the material M2 would be approximately 5 nm $\times$ 15% = 0.75 nm.

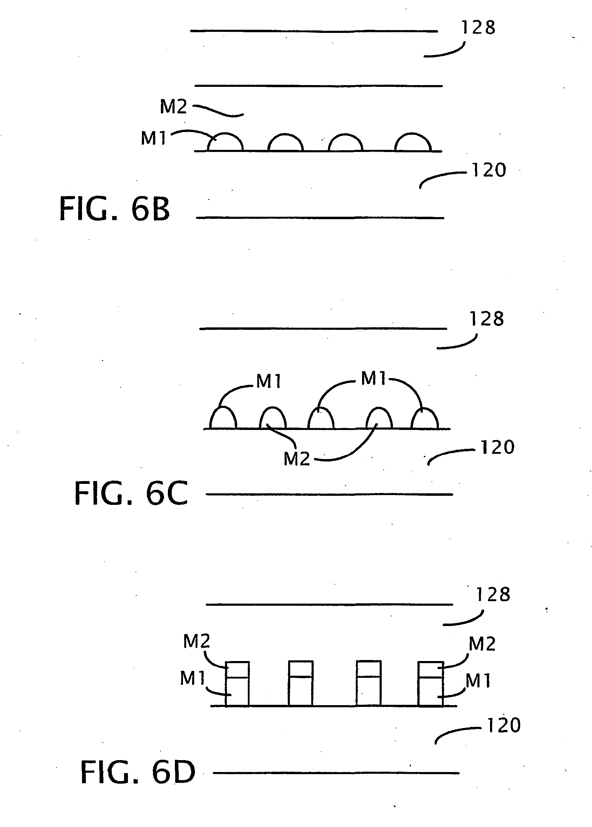

FIG. 6B shows an example in which a spatially continuous layer of material M2 is deposited on top of islands of material M1. FIG. 6C shows an example in which islands of materials M1 and M2 are deposited on the substrate 120. FIG. 6D shows islands of stacks of materials M1 and M2 formed on the substrate 120. The stacks can be formed by, for example, depositing continuous layers of materials M1 and M2, then etching the continuous layers to form the stacks.

6.3 Using a chemical reaction forming a thin layer

Another way to form a thin layer is to induce a chemical reaction with a material. For example, the layer 124 in FIG. 2C can be formed by oxidizing the layer 122. Note that an electric field that is generated due to charge separation, described in Section 2.1 above, can either help or prevent a chemical reaction (including oxidization) from occurring, depending on the direction of the electric field. In one example, the layer 122 is a layer of silicon. By passing air (which includes oxygen and nitrogen) over the layer of silicon, a thin layer of silicon oxide is formed on the layer of silicon. The silicon oxide can grow on either side or both sides of the silicon layer. In another example, nitrogen interacts with the material in the layer 122 to form a nitride, which becomes the layer 124.

6.4 Combining the two layers

When two layers are thin (for example, less than the effective Debye lengths), the combination of the two layers can be facilitated by the electric field generated by charge separation. A smaller amount of energy per unit volume may then be required to form the combination, as compared to the energy required to cause two thicker layers to combine. Combination of two thin layers can be achieved by, in various versions of the system, for example, without limitation, mixing, boundary blurring, alloying, chemical reaction, diffusion, or field induced mass transfer over boundary. The reaction between the two layers can be endothermic or exothermic.

In the examples in which the two thin layers have materials (M1, M2) = (Si, Ge) or (Au, indium tin oxide (ITO)), the reaction between the two thin layers are endothermic reactions. Such reactions would require a higher power density if the layers were thicker, such as having a thickness comparable to a quarter of a wavelength. When the layers are thin, such as within a few Debye lengths, the strong electric field that is generated due to charge separation will assist the reaction, so that a write beam having a lower power density can be used when applied for the same duration of time, or a write beam having the same power density can be applied for a shorter period of time.

7 Examples of recordable layers each having two thin layers

Samples of recordable layers, each having two thin layers of materials (each layer approximately equal to or less than 20 nm), were prepared and their optical properties before and after thermal treatment (or inscription) are measured. The measurements are shown in Tables 1-9 below.

The samples can be grouped into five categories based on the material types of the two thin layers: (1) metal/metal, (2) metal/insulator, (3) semiconductor/semiconductor, (4) semiconductor/insulator, and (5) metal/semiconductor. Each of the samples included a glass substrate or a polycarbonate substrate. The glass substrates were cleaned by ultrasonic cleaner and soaked in acetone or ethanol for at least 10 minutes. The polycarbonate substrates were kept in a clean and dry environment after they were produced. In each sample, two thin layers of materials were deposited on the substrate using sputtering equipment, Modular Single Disk Sputtering System "Trio CUBE" (Balzers), available from Unaxis. The base pressures of the main chamber and the process chamber were maintained below $10^{-7}$ mbar. The operation pressure in the process chamber was in the range of $10^{-3}$ to $10^{-2}$ mbar. The samples were prepared with Argon as working gas. The thicknesses of the layers were determined by the sputtering time (typically less than 4 seconds) and the sputtering power density (typically 1.5 ~ 15 W/cm$^2$). The thicknesses of the materials indicated in the tables were estimated based on the sputtering yield of the material, the sputtering time, and the sputtering power used.

The reflectivity and transmissivity of each recordable layer prepared on a glass substrate were measured using N&K Analyzer 1200RT shortly after the two thin layers were deposited. The measurements are indicated in the tables below as "before thermal treatment." The reflectivity and transmissivity values were measured using three different lasers (read beams) having different wavelengths that correspond to three types of optical disc standards, Blu-ray DVD or HD DVD (405 nm), DVD (655 nm), and Compact Disc (780 nm), respectively. The samples were subject to thermal treatments in a furnace having an atmosphere of 93% Argon and 7% Hydrogen gas to prevent oxidation during heat treatment. The heat treatment temperatures are indicated in the tables below. The heat treatment time was two hours. After heat treatment, the reflectivity and transmissivity of the samples were measured again using the three standard laser wavelengths. The reflectivity and transmissivity values are indicated in the table as "after thermal treatment." The "optical contrast" represents the contrast in reflectivity before and after thermal treatment, and is defined as (Rb-Ra)/Rb, where Rb and Ra are reflectivity before and after thermal treatment respectively.

The samples using polycarbonate substrates were bound with a protective layer to form optical discs. The inscription process was performed using DDU-1000 test equipment, available from Pulstec. The laser inscription power ranged from 0.7 mW to 55 mW, and the laser wavelength was 655 nm. The reflectivities of the recordable layers before and after inscription were measured and indicated in the tables as "before recording" and "after recording," respectively. In the samples using polycarbonate substrates, the areas that were inscribed can be easily identified by bare eyes to be distinctively more transparent than areas that were not inscribed, so the precise transmissivity values were not measured.

Measurements of the samples:

7.1 Recordable layer having metal/metal thin layers

Table 1

| Material | Au | Ag | | Wavelength (nm) | | |
|---|---|---|---|---|---|---|
| Thickness (nm) | 2.4 | 15 | Temperature of Heat-Treatment 300°C | 405 nm | 655 nm | 780 nm |
| Transmissivity | | | Before Thermal-treatment | 48.4% | 22.6% | 16.1% |
| | | | After Thermal-treatment | 22.6% | 39.4% | 44.4% |
| Reflectivity | | | Before Thermal-treatment | 36.6% | 67.4% | 74.6% |
| | | | After Thermal-treatment | 20.4% | 29.7% | 26.5% |
| Optical contrast | | | | 44.26% | 55.93% | 64.48% |

The measurements shown in Table 1 indicate that, when the two thin layers are Au (2.4 nm) and Ag (15 nm), after thermal treatment, the transmissivity increased and the reflectivity decreased with respect to read beams having wavelengths 655 nm and 780 nm. At wavelengths 655 nm and 780 nm, the contrasts in reflectivities were 55.93% and 64.48%, respectively.

Table 2

| Material | Al | Au | | Wavelength (nm) | | |
|---|---|---|---|---|---|---|
| Thickness (nm) | 5.9 | 1.4 | Temperature of Heat-Treatment 500°C | 405 nm | 655 nm | 780 nm |
| Transmissivity | | | Before Thermal-treatment | 47.7% | 45.5% | 40.1% |
| | | | After Thermal-treatment | 68.6% | 54.5% | 71.7% |
| Reflectivity | | | Before Thermal-treatment | 19.7% | 26.2% | 31.2% |
| | | | After Thermal-treatment | 10.4% | 14.0% | 11.1% |
| Optical contrast | | | | 47.21% | 46.56% | 64.42% |

The measurements shown in Table 2 indicate that, when the two thin layers are Al (5.9 nm) and Au (1.4 nm), after thermal treatment, the transmissivity increased and the reflectivity decreased with respect to read beams having wavelengths 405 nm, 655 nm, and 780 nm. At wavelengths 405 nm, 655 nm, and 780 nm, the contrasts in reflectivities were 47.21%, 46.56%, and 64.42%, respectively.

7.2 Recordable layer having metal / insulator thin layers

Table 3

| Material | Ag_Al_Cu_alloy | SiO2 | Temperature of Heat-Treatment 500°C | Wavelength (nm) | | |
|---|---|---|---|---|---|---|
| Thickness (nm) | 8 | 2.4 | | 405 nm | 655 nm | 780 nm |
| Transmissivity | Before Thermal-treatment | | | 55.5% | 46.2% | 43.4% |
| | After Thermal-treatment | | | 73.5% | 82.4% | 82.8% |
| Reflectivity | Before Thermal-treatment | | | 17.2% | 22.8% | 43.4% |
| | After Thermal-treatment | | | 11.8% | 9.7% | 9.7% |
| Optical contrast | | | | 31.4% | 57.46% | 59.58% |

The measurements shown in Table 3 indicate that, when the two thin layers are Ag_Al_Cu_alloy (8 nm) and $SiO_2$ (2.4 nm), after thermal treatment, the transmissivity increased and the reflectivity decreased with respect to read beams having wavelengths 405 nm, 655 nm, and 780 nm. At wavelengths 405 nm, 655 nm, and 780 nm, the contrasts in reflectivities were 31.4%, 57.46%, and 59.58%, respectively.

Table 4

| Material | Al | AlOx | Writing Power 6 mW | Wavelength (mn) |
|---|---|---|---|---|
| Thickness (nm) | 6 | ~1 | | 655 nm |
| Reflectivity | Before Recording | | | 15.0% |
| | After Recording | | | 2.0% |
| Optical contrast | | | | 86.67% |

The measurements shown in Table 4 indicate that, when the two thin layers are Al (6 nm) and AlOx (~1 nm), after inscription, the reflectivity decreased with respect to a read beam having a wavelength 655 nm. The contrast in reflectivity was 86.67%. Based on visual inspection with bare eyes, the transmissivity of the inscribed portion was higher than un-written portions.

7.3 Recordable layer having semiconductor / semiconductor thin layers

Table 5

| Material | Si | Ge | Writing Power 16 mW | Wavelength (nm) |
|---|---|---|---|---|
| Thickness (nm) | 9 | 20 | | 655 nm |
| Reflectivity | Before Recording | | | 40.3% |
| | After Recording | | | 15.3% |
| Optical contrast | | | | 62.03% |

The measurements shown in Table 5 indicate that, when the two thin layers are Si (9 nm) and Ge (20 nm), after inscription, the reflectivity decreased with respect to a read beam having a wavelength 655 nm. The contrast in reflectivity was 62.03%. Based on visual inspection with bare eyes, the transmissivity of the inscribed portion was higher than un-written portions.

7.4 Recordable layer having semiconductor / insulator thin layers

Table 6

| Material | Ge | GeOx | Writing Power 16 mW | Wavelength (nm) |
|---|---|---|---|---|
| Thickness (nm) | 20 | ~1 | | 655 nm |
| Reflectivity | Before Recording | | | 36.5% |
| | After Recording | | | 8.8% |
| Optical contrast | | | | 76.00% |

The measurements shown in Table 6 indicate that, when the two thin layers are Ge (20 nm) and GeOx (~1 nm), after inscription, the reflectivity decreased with respect to a read beam having for a wavelength 655 nm. The contrast in reflectivity was 76.00%. Based on visual inspection with bare eyes, the transmissivity of the inscribed portion was higher than un-written portions.

Table 7

| Material | Si | SiOx | Writing Power 18 mW | Wavelength (nm) |
|---|---|---|---|---|
| Thickness (nm) | 18 | ~1 | | 655 nm |
| Reflectivity | Before Recording | | | 21.6% |
| | After Recording | | | 11.2% |
| Optical contrast | | | | 48.01% |

The measurements shown in Table 7 indicate that, when the two thin layers are Si (18 nm) and SiOx (~1 nm), after inscription, the reflectivity decreased with respect to a read beam having a wavelength 655 nm. The contrast in reflectivity was 48.01%. Based on visual inspection with bare eyes, the transmissivity of the inscribed portion was higher than un-written portions.

7.5 Recordable layer having metal /semiconductor thin layers

Table 8

| Material | Ag | Ge | Temperature of Heat-Treatment 500°C | Wavelength (nm) | | |
|---|---|---|---|---|---|---|
| Thickness (nm) | 6 | 20 | | 405 nm | 655 nm | 780 nm |
| Transmissivity | Before Thermal-treatment | | | 7.1% | 18.3% | 27.6% |
| | After Thermal-treatment | | | 69.2% | 49.5% | 50.9% |
| Reflectivity | Before Thermal-treatment | | | 54.2% | 43.0% | 34.1% |
| | After Thermal-treatment | | | 8.2% | 21.9% | 25.1% |
| Optical contrast | | | | 84.87% | 49.07% | 26.39% |

The measurements shown in Table 8 indicate that, when the two thin layers are Ag (6 nm) and Ge (20 nm), after thermal treatment, the transmissivity increased and the reflectivity decreased with respect to read beams having wavelength 405 nm, 655 nm, and 780 nm. At wavelengths 405 nm, 655 nm, and 780 nm, the contrasts in reflectivities were 84.87%, 49.07%, and 26.39%, respectively

Table 9

| Material | Si | Al | | Wavelength (nm) | | |
|---|---|---|---|---|---|---|
| Thickness (nm) | 2.4 | 6 | Temperature of Heat-Treatment 500°C | 405 nm | 655 nm | 780 nm |
| Transmissivity | | | Before Thermal-treatment | 50.6% | 40.3% | 37.3% |
| | | | After Thermal-treatment | 88.7% | 91.0% | 91.0% |
| Reflectivity | | | Before Thermal-treatment | 23.0% | 29.8% | 32.6% |
| | | | After Thermal-treatment | 10.0% | 9.0% | 9.0% |
| Optical contrast | | | | 56.52% | 69.80% | 72.39% |

The measurements shown in Table 9 indicate that, when the two thin layers are Si (2.4 nm) and A1 (6 nm), after thermal treatment, the transmissivity increased and the reflectivity decreased with respect to read beams having wavelengths 405 nm, 655 nm, and 780 nm. At wavelengths 405 nm, 655 nm, and 780 nm, the contrasts in reflectivities were 56.62%, 69.80%, and 72.39%, respectively

8 Alternative recording structures

In examples above, generally, an optical disc has one inscription layer that includes two thin layers, in which the two thin layers interact upon application of a write beam. Alternatively, an optical disc can also have two or more inscription layers, each including multiple thin layers. The additional inscription layers allow the optical disc to have a larger storage capacity. As another alternative, more than two thin layers in one inscription layer can be used to create different mechanisms for changing optical contrast in inscription.

8.1 Multiple inscription layers

Approaches of the types described above can be applied to recording media, such as recordable discs, such that two or more inscription layers are used, and optical beams inscribing or reading one layer may have to pass through another layer. Therefore, characteristics such as transmissivity of the inscription layer can affect the performance (for example, change optical contrast) characteristics achieved using another layer.

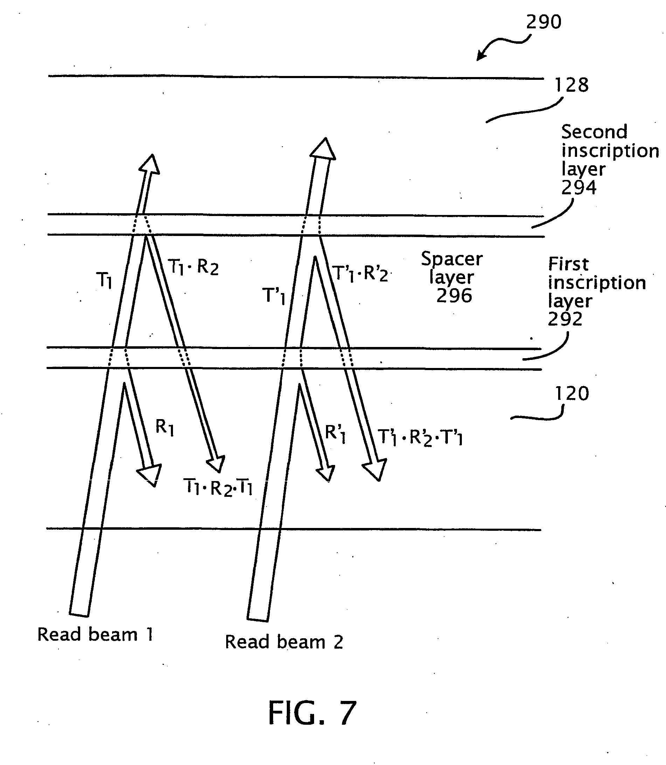

FIG. 7 shows a cross section of a version of a recordable disc, referred to herein as a dual-layer recordable disc 290, having a transparent substrate 120, a first inscription layer 292, a transparent spacer layer 296, a second inscription layer 294, and a protective layer 128. The read and write beams enter the disc 170 from the side of the substrate 120. Reading data from and writing data to the first inscription layer 292 is similar to reading data from and writing data to the inscription layer 126 of disc 104 in FIG. 2A. Reading data from and writing data to the second inscription layer 294, however, is affected by the transmissive properties of the first layer 292, because how much light passes the first inscription layer 292 determines how much light is available for reading data from and writing data to the second inscription layer 294.

Assume that, prior to inscription, the first inscription layer 292 has a reflectivity R1 and a transmissivity T1, and the second inscription layer 294 has a reflectivity R3. Assume that, after inscription, the first inscription layer 292 has a reflectivity R2 and a transmissivity T2, and the second inscription layer 294 has a reflectivity R4. The optical contrast modulation for the first inscription layer 292 is

$$(R1 - R2) / R1,$$

whereas the optical contrast modulation for the second inscription layer 294 is

$$(R3 \times T1^2 - R4 \times T2^2) / (R3 \times T1^2).$$

Here, the optical contrast modulation for the second inscription layer 294 refers to the contrast in reflectivity as measured by a detector (for example, 110) positioned outside of the substrate 120.

As an example, assume that after inscription, the reflectivity of the first inscription layer 292 decreases by 40% and the transmissivity increases by 15%, so that R2 = 0.4 R1, and T2 = 1.15 T1, then the optical contrast modulation for the first inscription layer 292 is (1 - 0.4)/1 = 60%. If, after inscription, the reflectivity of the second inscription layer 294 also decreases by 40%, so that R4 = 0.4 × R3, then the optical contrast modulation for the second inscription layer 294 is (1 - 0.4 × 1.15$^2$)/1 = 47%, which is less than that of the first inscription layer 292.

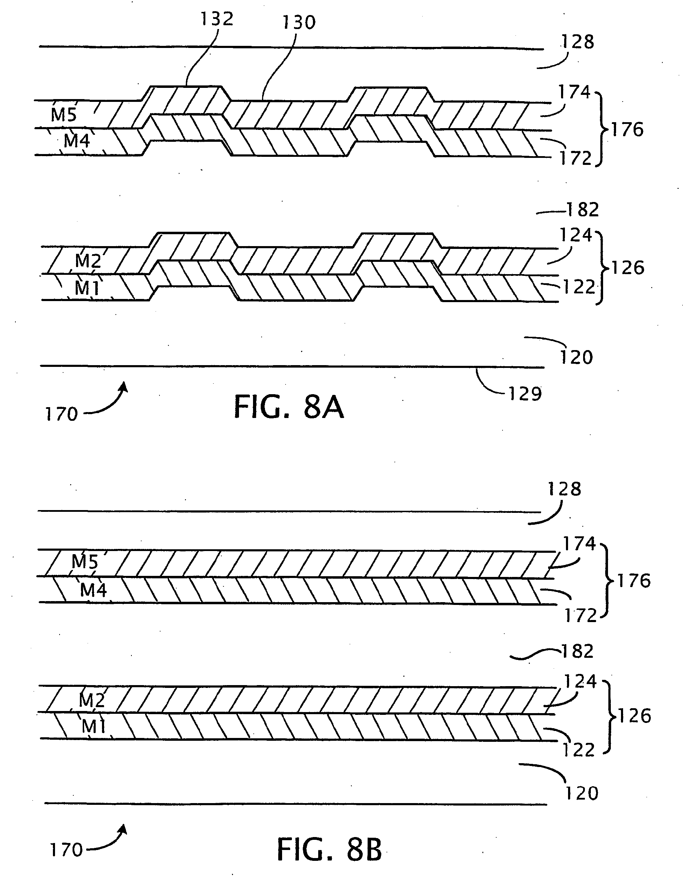

FIGS. 8A to 8C show a version of the dual-layer recordable disc, in which each inscription layer includes two sub-layers. Generally, FIGS. 8A to 8C can be compared to FIGS. 2A to 2C, which illustrate use of a single inscription layer.

FIG. 8A shows a cross section of a dual-layer recordable disc 170 along a radial direction of the tracks. The disc 170 includes a transparent substrate 120, a first inscription layer 126, a transparent spacer layer 182, a second inscription layer 176, and a protective layer 128. The read and write beams enter the disc 170 from the side of the substrate 120.

The first inscription layer 126 includes a first layer 122 of material M1 and a second layer 124 of material M2, which can be similar to those used for the disc 104 of FIGS. 2A to 2C. Similar to the disc 104, the first and second layers 122 and 124 of the dual-layer disc 170 each has a thickness of less than the Debye length of the respective layer. The transparent substrate 120 and the protective layer 128 can be composed of glass or polycarbonate. The second inscription layer 176 includes a first layer 172 of material M4 and a second layer 174 of material M5, which can be thin layers that are similar to the layers 122 and 124.

Similar to the process for manufacturing the disc 104 of FIGS. 2A to 2C, a variety of manufacturing approaches can be used to fabricate the thin sub-layers of the inscription layers on the disc 170. For example, each layer can be formed on top of the previous layer by physical vapor deposition (PVD), chemical vapor deposition (CVD), plasma enhanced chemical vapor deposition (PECVD), metal organic chemical vapor deposition (MOCVD), or molecular beam epitaxy (MBE).

Similar to the disc 104, the disc 170 includes groove tracks 130 and land tracks 132 that have different reflectivities with respect to a read beam due to their different heights relative to the substrate 120. Data can be written in the groove track 130 only, in the land track 132 only, or in both the groove and land tracks, for example, depending on the recording standard being used.

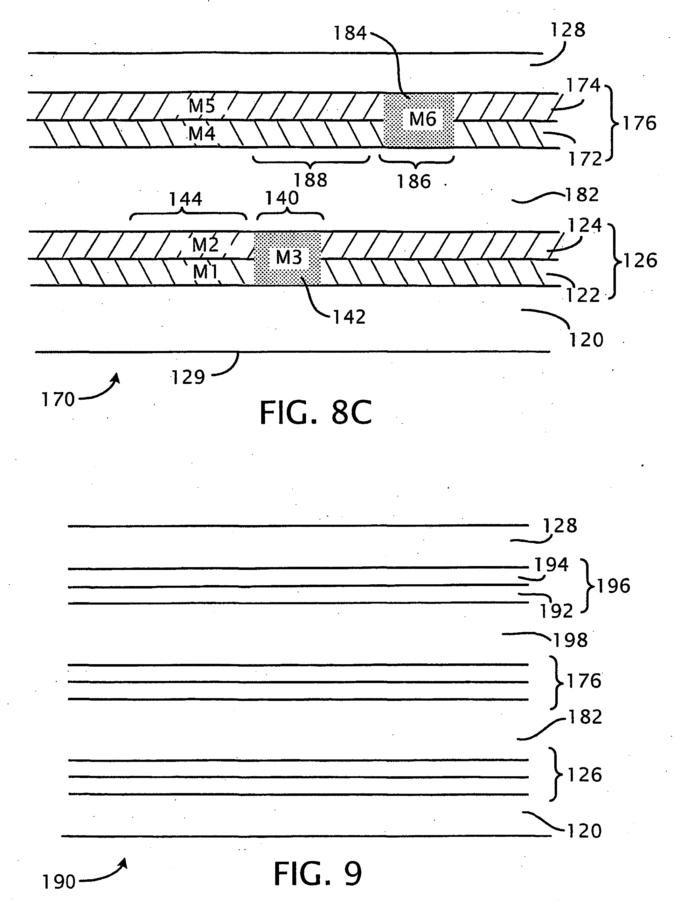

FIG. 8B shows a cross section of the disc 170 along a lengthwise direction parallel to a track. FIG. 8C shows the same cross section after inscription. In some examples, a write process for writing data into the first inscription layer 126 is similar to the write process for writing data into the inscription layer 126 of the disc 104. When a write beam is focused on the first inscription layer 126 in disc 170, the thermal energy of the write beam increases the temperature of the inscription layer 126, causing the materials M1 and M2 to interact to form a layer 142 of material M3 that has an optical property different from the combination of layers 122 and 124.

In the example in which the first and second layers 172 and 174 are thin layers similar to the first and second layers 122 and 124, the write process for writing data to the second inscription layer 176 is similar to the write process for writing data to the first inscription layer 126. When the write beam is focused on the second inscription layer 176, the thermal energy of the write beam increases the temperature of the inscription layer 176, causing the materials M4 and M5 to interact to form a layer 184 of material M6 that has an optical property different from the combination of layers 172 and 174.

The dual-layer disc 170 may comply with, for example, the standard specifications of dual-layer DVD+R (DVD+R DL). For example, writing is accomplished by applying a laser beam of wavelength 655 nm with power level of less than 30 mW on the spot when the disc is rotated at 2.4X speed, and with power level of less than 40 mW on the spot at 4X speed.

In some examples, the first inscription layer 126 absorbs approximately 20% or less of the beam energy, and the second inscription layer 176 absorbs approximately the same amount of energy.

During a read operation that accesses the first inscription layer 126, the reflected signal detected by the detector 110 is determined mostly by reflectivity properties of the first inscription layer 126. During a read operation that accesses the second inscription layer 176, the reflected signal detected by the detector 110 is determined mostly by reflectivity properties of the second inscription layer 176 and the transmission properties of the first inscription layer 126.

When the read beam is focused on an unwritten portion 144 of the first inscription layer 126, the reflectivity and transmissivity are represented R1 and T1, respectively. When the read beam is focused on a written portion 142 of the first inscription layer 126, the reflectivity and transmissivity are represented by R2 and T2, respectively. The parameters R1 and R2 represent the overall reflectivity of the disc 170 when the beam is focused on the first inscription layer 126. Although some of the light is also reflected by the second inscription layer 176, the light reflected from the second inscription layer 176 is defocused and only a negligible amount is detected by the detector 110.

In this example, materials and thicknesses of the layers 122 and 124 are selected so that R1 > R2 and T1 < T2. Specifically, at the wavelength 655 nm of the read beam, R1 ≈ 17%, R2 ≈ 7%, T1 ≈ 62%, and T2 ≈ 73%. Here, R1 > 16% and the optical contrast modulation (R1 - R2)/R1 ≈ 60%, which satisfies the first layer of the dual-layer DVD+R standard. When the read beam scans a track in the first inscription layer 126, the amount of light reflected by the first inscription layer 126 varies depending on whether the read beam 108 is focused on the portions 140 or 144. The variation in reflectivity is detected, thereby reading data previously recorded in the first inscription layer 126 by the write beam.

When the read beam is focused on an unwritten portion 188 of the second inscription layer 176, the reflectivity is represented by R3. When the read beam is focused on a written portion 186 of the second inscription layer 176, the reflectivity is represented by R4. The parameters R3 and R4 represent the overall reflectivity of the disc 170 when the beam focused on the second inscription layer 176. In this example, materials and thicknesses of the layers 172 and 174 are selected so that R3 > R4, R3 > 16%, and the optical contrast modulation (R3 - R4)/R3 > 60%, which satisfies the second layer of the dual-layer DVD+R standard.

Because the amount of light reflected by the second inscription layer 176 depends on the amount of light reaching the second inscription layer 176, the parameters R3 and R4 are affected by the parameters T1 and T2. An advantage of using thin layers for the layers 122 and 124 is that both T1 and T2 are greater than 60%, thus more than 60% of the read beam is transmitted to the second inscription layer 176.

When the read beam scans a track in the second inscription layer 176, the amount of light reflected by the second inscription layer 176 varies depending on whether the read beam 108 is focused on the portions 186 or 188. The variation in reflectivity is detected, thereby reading data previously recorded in the second inscription layer 176 by the write beam.

In the example of FIGS. 8A to 8C, the disc 170 includes two inscription layers 126 and 176. Additional inscription layers may be used. For example, FIG. 9 shows a cross section of a disc 190 along a lengthwise direction parallel to a track. The disc 190 includes a transparent substrate 120, a first inscription layer 126, a first transparent spacer layer 182, a second inscription layer 176, a second transparent spacer layer 198, a third inscription layer 176, and a protective layer 128. The read and write beams enter the disc 170 from the side of the substrate 120.

In this example, each of the first, second, and third inscription layers uses thin layers. The materials and thicknesses of the sub-layers of each of the first and second inscription layers are selected so that more than 60% of the light passes through each of the first and second inscription layers. Taking into account the absorption by the layers 120, 182, and 198, there will still be about 30% of incident light reaching the third inscription layer 196. Because the thin sub-layers of the third inscription layer 196 only need a small amount of energy to react (due to strong electric field in the sub-layers), the amount of light reaching the third inscription layer 196 has sufficient power density to cause the two thin sub-layers to combine and change reflectivity.

8.2 <u>Inscription structure having more than two thin layers</u>

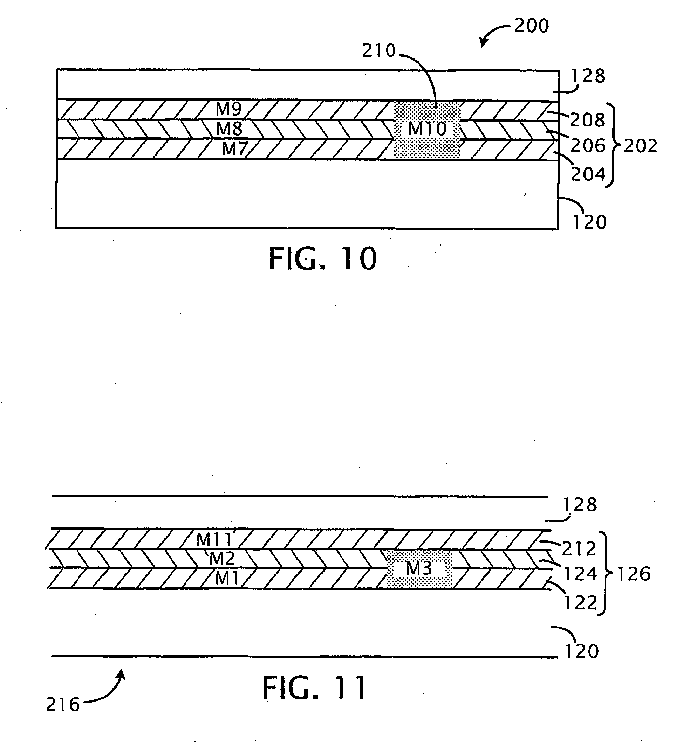

In designing an inscription layer, such as 126, 176, or 196, a third layer may be added. For example, referring to FIG. 10, a recordable disc 200 includes a transparent substrate 120, an inscription layer 202, and a protective layer 128. The inscription layer 202 includes a first layer 204 of material M7, a second layer 206 of material M8, and third layer 208 of material M9. The materials M7 and M9 can be the same or different. The layers 204, 206, and 208 are designed so that upon application of a write power, the layers 204, 206, and 208 combine to form a layer 210 of material M10.

Assume that $\alpha_{laser}$ is the read beam frequency, and $\alpha 7$, $\alpha 8$, $\alpha 9$, and $\alpha 10$ are the plasma frequencies of materials M7, M8, M9, and M10, respectively. The thicknesses and materials of the materials M7, M8, and M9 are selected so that $\alpha 10 < \alpha_{laser}$, and at least one of $\alpha 7$, $\alpha 8$, and $\alpha 9$ is greater than $\alpha_{laser}$, so that the reflectivity decreases after inscription.

The three layers can all be inorganic materials. The materials M7, M8, and M9 can be metal, dielectric, or semiconductor material described above.

In some examples, an inscription layer having four or more thin sub-layers may be used. In some examples, increasing the number of layers may increase the optical contrast before and after inscription.

8.3 <u>Transparent contrast enhancing layer(s)</u>

Referring to FIG. 11, a recordable disc 216 includes a transparent substrate 120, an inscription layer 214, a contrast enhancement layer 212, and a protective layer 128. The inscription layer 214 includes a layer 122 of material M1 and a layer 124 of material M2, similar to those of the layers 122 and 124 of disc 104. When a write power is applied to the inscription layer 214, the materials M1 and M2 combine to form a material M3, similar to the situation in disc 104.

The contrast enhancement layer 212 enhances the contrast of the reflectivity between data regions and blank regions, i.e., the difference in reflectivity before and after inscription is enhanced. In some examples, the layer 212 does not affect the data inscription process, and does not combine with the layers 122 and 124.

In some examples, the contrast enhancement layer 212 includes a material (for example, a metal) that increases the charge carrier density in the inscription layer 126.

In some examples, the plasma frequency of the inscription layer decreases after recording, and the contrast in reflectivity or transmissivity increases after adding the contrast enhancement layer 212. The effective plasma frequency (of the combination of the inscription layer 126 and the contrast enhancement layer 212) before recording is increased a lot, and the effective plasma frequency after recording is increased only a little (or decreased), so the difference in the effective plasma frequency increases.

In some examples, the plasma frequency increases after recording, and the contrast in reflectivity or transmissivity increases after adding the contrast enhancement layer 212. The effective plasma frequency before recording is increased a little (or decreased), and the effective plasma frequency after recording is increased a lot, so the difference in effective plasma frequency increases.

In some examples, the contrast enhancement layer 212 reduces the charge carrier density. In some examples, the plasma frequency decreases after recording, and contrast in reflectivity or transmissivity increases after adding the contrast enhancement layer 212. The effective plasma frequency before recording is decreased a little, and the effective plasma frequency after recording is decreased a lot, so the difference in effective plasma frequency increases.

In some examples, the plasma frequency increases after recording, and contrast in reflectivity or transmissivity increases after adding the contrast enhancement layer 212. The effective plasma frequency before recording is decreased a lot, and the effective plasma frequency after recording is decreased a little, so the difference in effective plasma frequency increases.

The transparent contrast enhancement layer 212 can be a layer of dielectric material or semiconducting material, such as silicon, germanium, zinc sulfide, or zinc oxide, etc., and can have a transmissivity greater than 50%.

In some examples, adding the layer 212 to the inscription layer 126 increases the amount of reflectivity before inscription. The increase in reflectivity can be associated with a number of situations: (1) decreased absorption; (2) decreased transmissivity; (3) decreased absorption and decreased transmissivity; (4) decreased absorption and increased transmissivity, where the increase in transmissivity is smaller than the decrease in absorption; and (5) decreased transmissivity and increased absorption, where the increase in absorption is smaller than the decrease in transmissivity.

In some examples, adding the layer 212 decreases the amount of reflectivity after inscription. The decrease in reflectivity can be associated with a number of situations: (1) increased absorption; (2) increased transmissivity; (3) increased absorption and increased transmissivity; (4) increased absorption and decreased transmissivity, where the increase in absorption is greater than the decrease in transmissivity; and (5) increased transmissivity and decreased absorption, where the increase in transmissivity is greater than the decrease in absorption.

In some examples, adding the layer 212 increases the amount of reflectivity before inscription and decreases the amount of reflectivity after inscription. The increase in reflectivity before inscription and the decrease in reflectivity after inscription can be associated with the situations described above.

In some examples, the thickness of the layer 128 is smaller than 20 nm. The appropriate thickness of the layer 128 depends on the material of the layer 128 as well as the materials for the other layers.

More than one contrast enhancement layers can be used. In some examples, the contrast enhancement layers do not combine with the other layers, and remains unchanged upon application of the write power. In other examples, the contrast enhancement layers themselves combine but do not combine with the inscription layer.

In some examples, the contrast enhancement layer 212 is selected so that, before inscription, the plasma frequency of the combination of the layer 212 and the inscription layer 214 is higher than the plasma frequency of the inscription layer 214 alone. In some examples, the contrast enhancement layer is selected so that, after inscription, the plasma frequency of the combination of the layer 212 and the inscription layer 214 is lower than the plasma frequency of the inscription layer 126 alone.

If more than one contrast enhancement layers are used, the contrast enhancement layers can be positioned on the same side of the layers that combine. In some examples, the contrast enhancement layers are positioned between the substrate 120 and the layer 122. In some examples, the contrast enhancement layers are positioned between the layer 124 and the protective layer 128. In some examples, one of the contrast enhancement layers is positioned between the substrate 120 and the layer 122, and another of the contrast enhancement layers is positioned between the layer 124 and the protective layer 128.

The disc 216 can be designed so that the contrast in transmissivity is increased after adding the contrast enhancement layer 212. Such discs can be used with optical disc drives that detect a contrast in transmissivity before and after inscription.

8.4 <u>Micro-resonant structures</u>

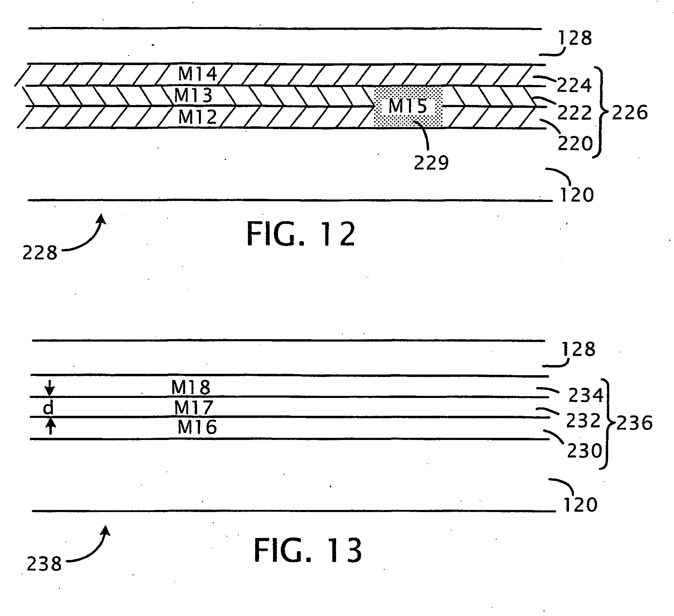

Referring to FIG. 13, an optical disc 238 includes an inscription layer 236 that has resonant-like properties with respect to a read beam. These properties are similar to the properties of a resonant cavity having a cavity length equal to one-half of a wavelength. In some examples, the inscription layer 236 has three layers 230, 232, and 234, in which the layers 230 and 234 is more reflective to the read beam than the layer 232, and the layer 232 is more transparent than the layers 230 and 234. The inscription layer 236 has resonant-like properties in which the amount of light reflected from the inscription layer 236 is more than the sum of light reflected by the two reflecting layers 230 and 234 individually. Assume the layers 230 and 234 have reflectivities R1 and R2, respectively, the layer 230 has a transmissivity T1, the layer 232 has a transmissivity T2, and that $R_{sum}$ represents the reflectivity of the inscription layer 236, then $R_{sum} > R1 + R2 * T1^2 * T2^2$. In these examples, it appears as though constructive interference occurs in the micro-resonant cavity so that a larger percentage of light is reflected.

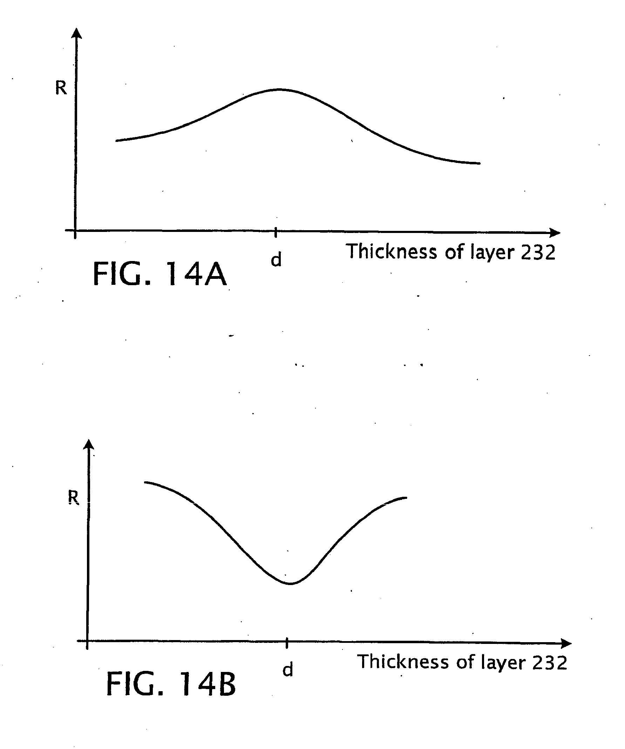

Referring to FIG. 14A, the thickness d of the layer 232 is selected so that when the thickness of the layer 232 deviates (either decreases or increases) from d, the reflectivity of the inscription layer 236 decreases. This phenomenon is similar to the situation where the thickness of a resonant cavity deviates from $1/2\Sigma$, the resonance decreases. The resonant-like properties of the inscription layer 236 is partly caused by strong electric fields at the interfaces between the layers, which affects the amount of light reflected from or transmitted through the layers.

The term "micro-resonant cavity" is used herein to refer to a structure that has resonant-like properties in which the amount of light reflected from the entire structure is more than the sum of light reflected by its constituent layers individually. Also, the micro-resonant cavity has one or more transparent layers sandwiched between two reflective surfaces, and the distance d between the two reflective surfaces is selected so that, if the distance between the two reflective surfaces deviates from d, the reflectivity of the micro-resonant cavity decreases. The term "micro-resonant structure" will be used to refer to a structure having one or more micro-resonant cavities.

The middle layer 232 has a thickness much smaller than one-half of the wavelength $\Sigma$ of the read beam. In some examples, the middle layer 232 has a thickness that is less than a Debye length determined based on charge carrier density of the layer. An advantage of using a micro-resonant cavity is that the constituent layers (for example, 230, 232, and 234) are much thinner than $1/2\ \Sigma$, so less energy is required to cause the layers to combine to change the properties of the micro-resonant cavity (as compared to the energy required to change the properties of a resonant cavity having a cavity length of $1/2\ \Sigma$).

In some examples, the thicknesses and materials of the layers 230, 232, and 234 are selected so that destructive interference occurs in the micro-resonant cavity formed between the layers 230 and 234. FIG. 14B shows that when the thickness of the layer 232 either decreases or increases from a particular value d, the reflectivity of the inscription layer 236 increases.

The micro-resonant cavity can be designed by selecting materials M16 and M18 that are more reflective, and a material M17 that is more transparent. Sandwiching the material M17 between the materials M16 and M18 causes light to bounce back and forth between the two reflective layers, causing constructive or destructive interference. Then the thickness of the middle layer 232 is selected so that the micro-resonant cavity has a higher reflectivity (indicating constructive interference).

The reflectivity of a micro-resonant cavity can be adjusted by changing the position of a reflective surface to change the micro-resonant cavity conditions from constructive interference to destructive interference, or vice versa. In some examples, the position of a reflective surface is changed by combining two or more layers.

The reflectivity of a micro-resonant structure can be adjusted by splitting one micro-resonant cavity into two, or by combining two micro-resonant cavities into one to change the micro-resonant cavity conditions from constructive interference to destructive interference, or vice versa. In some examples, splitting or combining micro-resonant cavities is achieved by combining two or more layers.

The following are examples of ways of changing optical properties of a micro-resonant structure. The thicknesses of layers are selected so that the reflectivity R of the micro-resonant cavity is initially higher, and that R decreases after changing the micro-resonant cavity conditions.

8.4.1 Change a micro-resonant cavity by shifting location of reflection

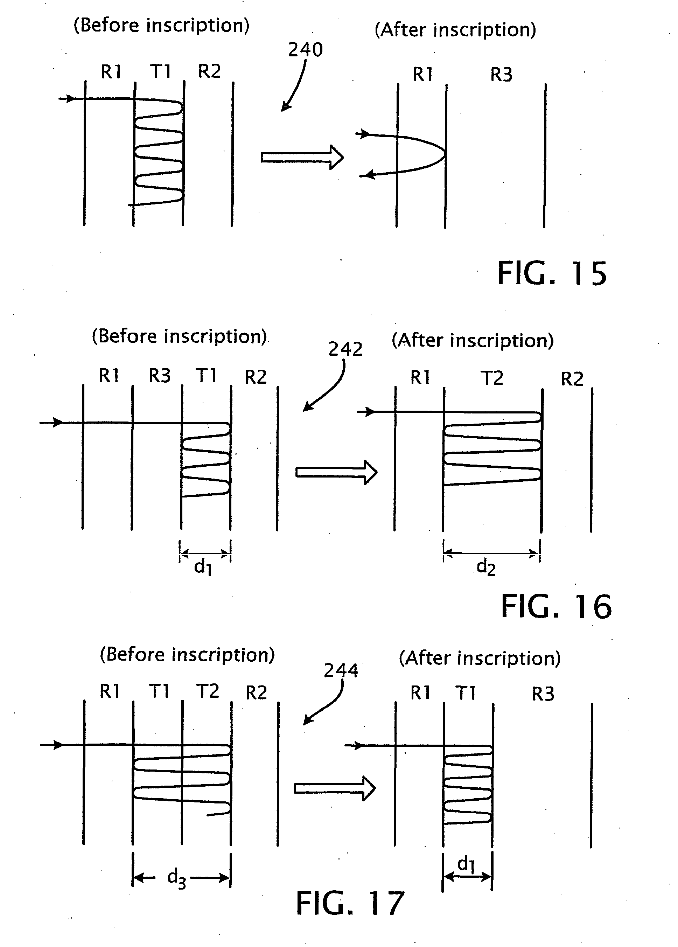

In some examples, the micro-resonant cavity conditions are modified by shifting the location of reflection of the layers. Referring to FIG. 15, a micro-resonant structure 240 has layers R1,T1, and R2, in which the layers R1 and R2 are more reflective than the layer T1, and the layer T1 is more transmissive than the layers R1 and R2. Read and write beams enter the micro-resonant structure 240 from the side of the layer R1. The layers T1 and R2 combine to form a layer R3 after inscription. The micro-resonant cavity is destroyed because there is no transparent layer between two reflecting surfaces. The layers R1 and R2 can have the same or different materials.

In some examples, the layers R1 and T1 combine to form a layer R3 after inscription. The micro-resonant cavity is destroyed because there is no transparent layer between two reflecting surfaces.

In some examples, the layers R1, T1, and R2 combine to form a layer T2 having a higher transmissivity after inscription. The micro-resonant cavity is destroyed because there is only one layer.

In some examples, the layers R1, T1, and R2 combine to form a layer R3 having a lower reflectivity after inscription. The micro-resonant cavity is destroyed because there is only one layer.

In the following, a layer denoted as Tn means that it has a transmissivity that is higher than other layers denoted as Rn, and a layer denoted as Rn means that it has a reflectivity that is higher than other layers denoted as Tn.

Referring to FIG. 16, a micro-resonant cavity 242 has layers R1, R3, T1, and R2 in sequence. Read and write beams enter the micro-resonant structure 242 from the side of the layer R1. The layers R3 and T1 combine to form a layer T2 after inscription. The micro-resonant cavity is modified because the thickness of the transparent layer is changed (from the thickness d1 of layer T1 to the thickness d2 of layer T2).

The thicknesses of the layers are selected so that before recording there is constructive interference, and after recording there is destructive interference, or vice versa. The layers R1 and R2 can have the same or different materials, the layers R1 and R2 can have the same or different materials, and the layers R1 and R2 have different materials.

Referring to FIG. 17, a micro-resonant cavity 244 has layers R1, T1, T2, and R2. Read and write beams enter the micro-resonant structure 244 from the side of the layer R1. The layers T2 and R2 combine to form a layer R3 after inscription. The micro-resonant cavity is modified because the thickness of the transparent layer is changed (from the sum d3 of thicknesses of layers T1 and T2 to just the thickness d1 of the layer T1). In some examples, the thicknesses are selected so that before recording there is constructive interference, and after recording there is destructive interference, or vice versa. The layers R1 and R2 can have the same or different materials, and the layers T1 and T2 have different materials.

8.4.2 <u>Change a micro-resonant cavity by changing a more reflective layer to a more transparent layer</u>

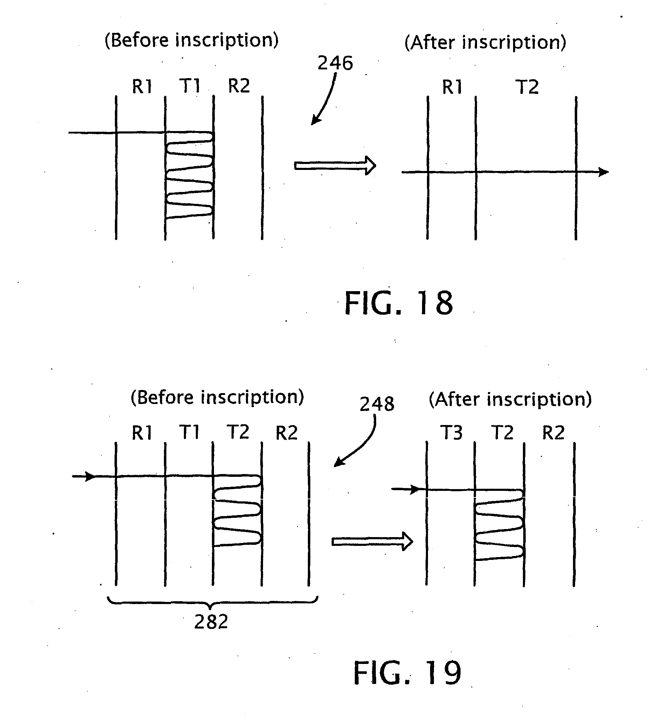

Referring to FIG. 18, a micro-resonant cavity 246 can be modified by changing a reflective layer to a more transparent layer. The micro-resonant cavity 246 includes layers R1,T1, and R2 in sequence. Read and write beams enter the micro-resonant structure 246 from the side of the layer R1. The layers T1 and R2 combine to form a layer T2 after inscription. The micro-resonant cavity is destroyed after inscription because there is only one reflecting surface (at layer R1). The layers R1 and R2 in FIG. 18 can have the same or different materials.

Referring to FIG. 19, a micro-resonant cavity 248 has layers R1, T1, T2, and R2 in sequence. Read and write beams enter the micro-resonant structure 248 from the side of the layer R1. Before inscription, a micro-resonant cavity 282 is formed between the reflective layers R1 and R2. After inscription, the layers R1 and T1 combine to form a layer T3, the reflectivity of the layer T3 being less than the reflectivity of the layer R1. The micro-resonant cavity is destroyed after inscription because there is only one reflecting surface (at layer R2). Even if the layer T3 is sufficient reflectivity so that a micro-resonant cavity 284 is formed between the layers T3 and R2, the overall reflectivity of the cavity 284 is less than that of the cavity 282 because the layer T3 has a lower reflectivity than the layer R1, and the length of the cavity also changed. The layers R1 and R2 in FIG. 19 can have the same or different materials, and the layers T1 and T2 have different materials.

8.4.3 <u>Splitting a micro-resonant cavity</u>

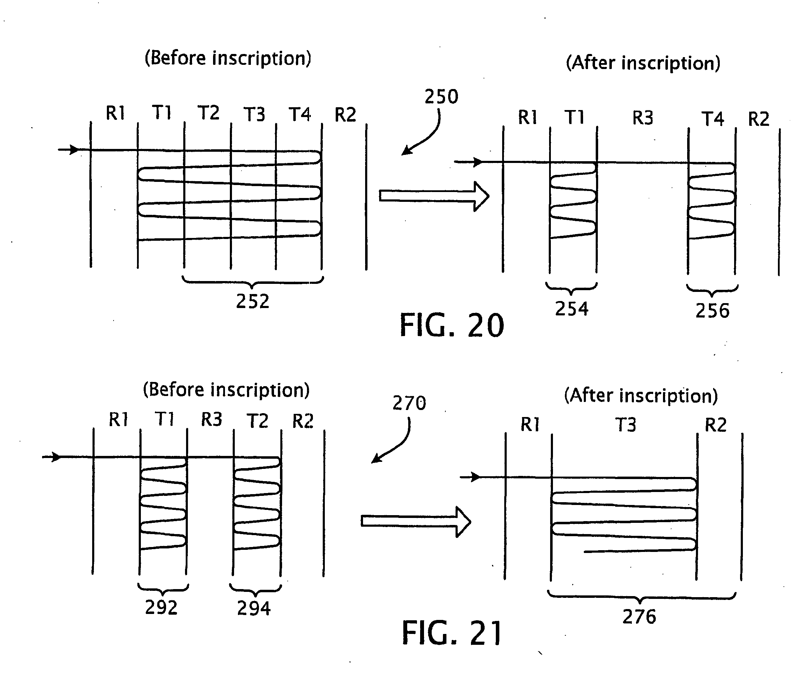

Referring to FIG. 20, a micro-resonant structure 250 has layers R1,T1, T2, T3, T4, and R2. Read and write beams enter the micro-resonant structure 250 from the side of the layer R1. Prior to inscription, a micro-resonant cavity 252 is formed between the layers R1 and R2. After inscription, the layers T2 and T3 combine to form a reflective layer R3. The original micro-resonant cavity 252 is split into two cavities: a micro-resonant cavity 254 between the layers R1 and R3, and a micro-resonant cavity 256 between the layers R3 and R2. In some examples, the micro-resonant cavities formed after inscription can have destructive interferences.

In this example, after inscription, the layers T2 and T3 combine to form the layer R3, which has a higher reflectivity than the layers T2 and T3. The overall reflectivity of the micro-resonant structure 250 is decreased because the overall reflectivities of the two micro-resonant cavities 254 and 256 is less than the reflectivity of the micro-resonant cavity 252.

The layers R1 and R2 can have the same or different materials. For the layers T1, T2, T3, and T4, non-adjacent layers can have the same or different materials, and adjacent layers have different materials.

8.4.4 <u>Combine two micro-resonant cavities to form one micro-resonant cavity</u>

Referring to FIG. 21, a micro-resonant structure 270 has layers R1, T1, R3, T2, and R2 in sequence. Read and write beams enter the micro-resonant structure 270 from the side of the layer R1. A micro-resonant cavity 272 is formed between the reflective layers R1 and R3, and another micro-resonant cavity 274 is formed between the reflective layers R3 and R2. The layers T1, R3, and T2 combine after inscription to form a layer T3. A micro-resonant cavity 276 is formed between the reflective layers R1 and R2 after inscription. Thus, in this example, two micro-resonant cavities is converted into one micro-resonant cavity after inscription. The layers R1, R3, and R2 can have the same or different materials, and the layers T1 and T2 can have the same or different materials.

8.4.5 <u>Change a micro-resonant cavity by changing the reflectivity of one of the layers.</u>

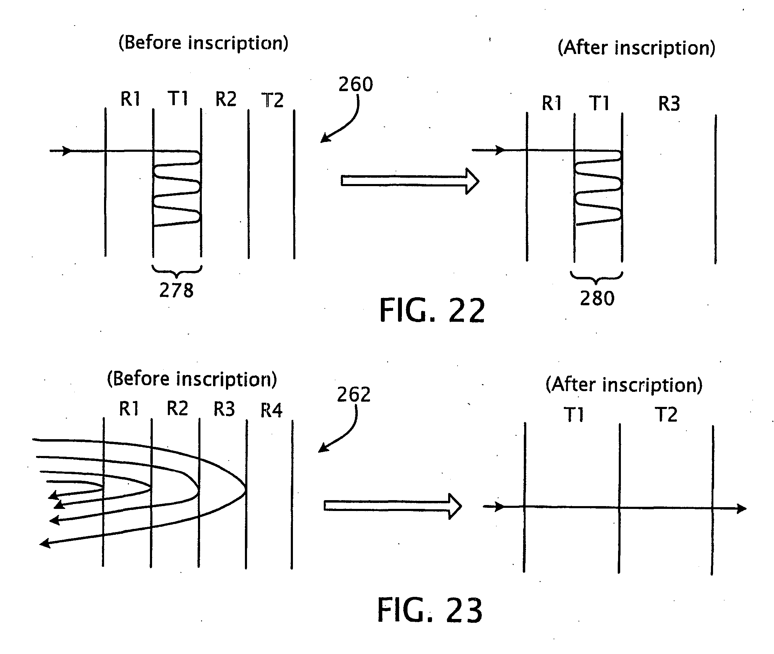

Referring to Fig. 22, a micro-resonant structure 260 includes layers R1, T1, R2, and T2 in sequence. Read and write beams enter the micro-resonant structure 260 from the side of the layer R1. A micro-resonant cavity 278 is formed between the reflective layers R1 and R2 before inscription. After inscription, the layers R2 and T2 combine to form a layer R3 so that a micro-resonant cavity 280 is formed between the reflective layers R1 and R3. The thickness of middle layer T1 does not change after inscription. The layers R2 and T2 are selected so that the reflectivity of the layer R3 is lower than the reflectivity of the layer R2, so that the overall reflectivity of the cavity 280 is lower than that of the cavity 278. The layers R1 and R2 can have the same or different materials, and the layers T1 and T2 can have the same or different materials.

8.4.6 Change a micro-resonant cavity by changing the dielectric constant of a middle layer without changing its thickness

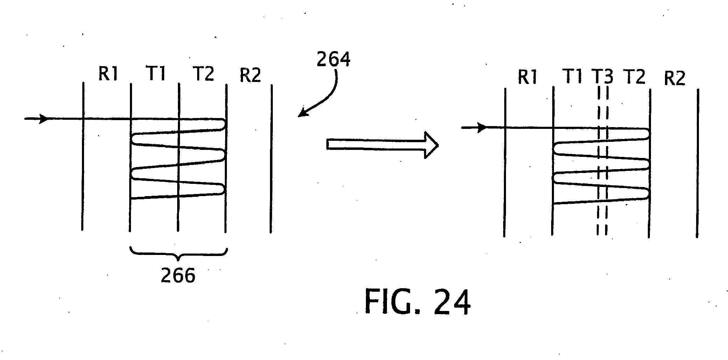

Referring to FIG. 24, a micro-resonant structure 264 includes layers R1, T1, T2, and R2 in sequence. Read and write beams enter the micro-resonant structure 264 from the side of the layer R1. Before inscription, a micro-resonant cavity 266 is formed between the reflective layers R1 and R2. The layers T1 and T2 are selected so that after inscription, the layers T1 and T2 partially combine to generate a layer T3. The overall dielectric constant of the layers T1, T3, and T2 (after inscription) is different from the overall dielectric constant of the layers T1 and T2 (before inscription), so the properties of the micro-resonant cavity 266 also changes.

8.5 Layer(s) for inverting contrast

Referring to FIG. 12, an optical disc 228 includes an inscription layer 226 and a contrast inversion layer 224 that inverts the contrast in reflectivity before and after inscription. The inscription layer 226 includes a layer 220 of material M12 and a layer 222 of material M13. The thicknesses and the materials of the layers 220 and 222 are selected so that upon application of a write power, the layers 220 and 222 combine to form a layer 229 of material M15, in which the layer 229 has a higher reflectivity and a lower transmissivity than those of the combination of layers 220 and 222. The contrast inversion layer 224 is selected so that, the layers 229 and 224 together have reflectivity that is lower than that of the overall reflectivity of the layers 220, 222, and 224. In other words, with the addition of the contrast inversion layer 224, the overall reflectivity of the disc 228 decreases after inscription.

In some examples, inversion of optical contrast is achieved by modifying optical properties of a micro-resonant structure. The micro-resonant structure can be designed by first selecting two layers of materials in which the reflectivity increases after inscription, and add more layers to create a micro-resonant cavity. After inscription, the two layers combine so that the micro-resonant cavity is modified to have a lower reflectivity, or is split into two cavities having a lower overall reflectivity. See the description of structures shown in FIGS. 15 and 20.

9 Additional implementations and applications

The following are examples of alternative implementations and applications. For example, for the dual-layer disc 170 (FIG. 8A), the second inscription layer 176 does not necessarily have to use thin layers that are similar to the first inscription layer 126. The second inscription layer 176 can have sub-layers such that the transmissivity of the layer 176 decreases after inscription. For example, the second inscription layer 176 can use a photo-sensitive dye layer and a metal reflective layer. The dye layer increases absorption after inscription, so that less light is transmitted through the dye layer and reflected by the metal layer, reducing the overall reflectivity after inscription.

In the dual-layer disc 170 (FIG. 8A), the first inscription layer 126 can include a micro-resonant structure that reduces reflectivity and increases transmissivity after inscription. Either one or both of the first and second inscription layers 126 and 176 of the disc 170 can use contrast enhancement layers to increase contrast.

In FIGS. 8A, 8B, 8C, and 9, each of the inscription layers 126, 176, and 196 has two thin sub-layers. Alternatively, in some examples, one or more of the inscription layers can each have more than two thin sub-layers that combine after inscription. One or more of the inscription layers can each have two sub-layers that by themselves increase reflectivity after inscription, but with the addition of a contrast inverting layer, reduces reflectivity after inscription, such that the decrease in reflectivity complies with an optical recording standard. One or more of the inscription layers can each have sub-layers that form resonant cavities such that the reflectivity is reduced after inscription.

In the disc 170 of FIGS 8A to 8C, the sub-layer 124 can generated by forming an oxide out of the first sub-layer 124.

FIG. 23 shows an inscription layer 262 that includes two double layers:

R1, R2 , R3, and R4. After inscription, the layers R1 and R2 combine to form a layer T1, and the layers R3 and R4 combine to form a layer T2. The combination of the layers R1, R2, R3, and R4 reflect more light than either the combination of layers R1 and R2, or the combination of layers R3 and R4. The combination of layers T1 and T2 transmits more light than either the combination of layers R1 and R2, or the combination of layers R3 and R4. The contrast generated by the combination of layers R1, R2, R3, and R4 is greater than the contrast generated by either the combination of layers R1 and R2, or the combination of layers R3 and R4.

The various layers of the recordable medium can have thicknesses and use materials other than those described above. The inscription layer can be made using methods other than those described above.

In some examples, the inscription process is endothermic, resulting in well-defined recording marks that can be closely packed to achieve a higher recording density. A smaller disc can be used to record the same amount of information as compared to a convention disc that uses organic dyes in the inscription layer.

The recordable medium does not necessarily have to be a disc. For example, the recordable medium can have a rectangular shape, or any other arbitrary shape. The recordable medium does not necessarily have to be flat. For example, the recordable medium can conform to the surface contour of a cube, a ball, or any other arbitrary volume.

Different types of the recordable medium can be used with different recording systems that have different addressing schemes. Different encoding / decoding schemes may be used to encode / decode data written to the recordable medium. The recordable medium does not necessarily have to comply with the CD-R, DVD+R, DVD-R, dual layer DVD+R, dual layer DVD-R, HD-DVD, or Blu-ray Disc DVD standards.

Although some examples have been discussed above, other implementations and applications are also within the scope of the following claims.

**Claims**

1. A method of generating optical contrast comprising:

   applying an energy to a micro-resonant structure having at least a first layer L1, a second layer L2, and a third layer L3 to cause at least two of the layers to combine,
   in which the layer L2 is disposed between the layers L1 and L3, the layer L1 has a reflectivity R1 and a transmissivity T1, the layer L3 has a reflectivity R3, and the layer L2 has a transmissivity T2 and a thickness that is less than one-fourth of a wavelength of a read beam, wherein the read beam has a frequency in the range of 400 nm to 460 nm, 630 nm to 690 nm, or 750 to 810 nm,
   in which prior to applying the energy, the micro-resonant structure has an overall reflectivity $R_{sum}$ that is greater than $R1 + T1^2 * T2^2 * R^3$.

2. The method of claim 1 in which the layer L2 has a thickness that is less than a Debye length determined based on a charge carrier density of the layer L2.

3. The method of claim 1 in which, after applying the energy, the reflectivity of the micro-resonant structure decreases.

4. The method of claim 1 in which, after applying the energy, the transmissivity of the micro-resonant structure increases.

5. The method of claim 1 in which the layer L2 has a reflectivity that is less than those of the layers L1 and L3.

6. The method of claim 1 in which the layer L2 has a higher transmissivity than those of layers L1 and L3.

7. The method of claim 1 in which the layers L2 and L3 combine to form a layer L4 that has a reflectivity higher than that of the layer L2.

8. The method of claim 1 in which the layers L1 and L2 combine to form a layer L4 that has a reflectivity higher than that of the layer L2.

9. The method of claim 1 in which the layers L1, L2, and L3 combine to form a layer L4.

10. The method of claim 9 in which the layer L4 has a transmissivity higher than the overall transmissivity of layers L1, L2, and L3 before inscription.

11. The method of claim 9 in which the layer L4 has a reflectivity less than the overall reflectivity of layers L1, L2, and L3 before inscription.

12. The method of claim 1 in which the layers L2 and L3 combine to form a layer L4 that has a reflectivity lower than those of the layers L1 and L3.

13. The method of claim 1 in which the micro-resonant structure also includes a layer L4 having a reflectivity higher than that of the layer L2, the layers L1, L4, L2, and L3 being positioned in sequence.

14. The method of claim 13 in which applying the energy causes the layers L4 and L2 to combine to form a layer L5 that has a reflectivity lower than those of the layers L1 and L3, the layer L5 being disposed between the layers L1 and L3.

15. The method of claim 1 in which the micro-resonant structure also includes a layer L4 having a reflectivity lower than those of the layers L1 and L3, the layers L1, L2, L4, and L3 being positioned in sequence.

16. The method of claim 15 in which the layers L4 and L3 combine to form a layer L5 that has a reflectivity higher than that of the layer L2, the layer L2 being disposed between the layers L1 and L5.

17. The method of claim 1 in which applying an energy to the micro-resonant structure causes the layers L2 and L3 combine to form a layer L4 that has a transmissivity higher than that of the layer L1.

18. The method of claim 1 in which the micro-resonant structure also includes a layer L4 having a reflectivity lower than those of layers L1 and L3, the layers L1, L2, L4, and L3 being positioned in sequence, the layers L2 and L4 having different materials.

19. The method of claim 18 in which, after inscription, the layers L1 and L2 combine to form a layer L5 that has a reflectivity lower than that of the layer L1.

20. The method of claim 18 in which, after inscription, the layers L2 and L4 partially combine to form a layer L5 having thickness less than a sum of the thicknesses of the layers L2 and L4, the layer L5 having a reflectivity less than those of the layers L1 and L3.

21. The method of claim 1 in which the micro-resonant structure also include layers L4, L5, and L6, the layers L1, L2, L4, L5, L6, and L3 being positioned in sequence, the layers L4, L5, and L6 having reflectivities lower than those of the layers L1 and L3, and adjacent layers of L2, L4, L5, and L6 having different materials.

22. The method of claim 21 in which the layers L4 and L5 combine to form a layer L7 after inscription, the layer L7 having a reflectivity higher than the layers L2 and L6.

23. The method of claim 22 in which after inscription, the layers L1, L2, and L7 form a micro-resonant cavity having an overall reflectivity greater than R1 $T1^2 * T2^2 * R7$, R7 being the reflectivity of the layer L3.

24. The method of claim 22 in which after inscription, the layers L1, L2, and L7 form a micro-resonant cavity having an overall reflectivity $R_{sum}$, in which $R_{sum} < R1$ and $R_{sum} < T1^2 * T2^2 * R7$, R7 being the reflectivity of the layer L7.

25. The method of claim 22 in which after inscription, the layers L7, L6, and L3 form a micro-resonant cavity having an overall reflectivity greater than R7 + $T7^2 * T6^2 * R3$, R7 being the reflectivity of the layer L7, T7 being the transmissivity of the layer L7.

26. The method of claim 22 in which after inscription, the layers L7, L6, and L3 form a micro-resonant cavity having an overall reflectivity $R_{sum}$, in which $R_{sum} < R7$ and $R_{sum} < T7^2 * T6^2 * R3$, R7 being the reflectivity of the layer L7, T7 being the transmissivity of the layer L7.

27. The method of claim 1 in which the micro-resonant structure also includes layers L4 and L5, the layers L1, L2, L4, L5, and L3 being positioned in sequence, the layers L1, L2, and L4 forming a micro-resonant cavity having an overall reflectivity greater than R1 + $T1^2 * T2^2 * R4$, R4 being the reflectivity of the layer L4, the layers L4, L5, and L3 form a micro-resonant cavity having an overall reflectivity greater than R4 + $T4^2 * T5^2 * R3$, T4 being the transmissivity of the layer L4, T5 being the transmissivity of the layer L5.

28. The method of claim 27 in which the layers L2, L4, and L5 combine to form a layer L6 after inscription, the layers L1, L6, and L3 forming a micro-resonant cavity.

29. The method of claim 28 in which the overall reflectivity of the micro-resonant structure before inscription is greater than the overall reflectivity of the micro-resonant structure after inscription.

30. The method of claim 1 in which the micro-resonant structure also includes a layer L4 having a reflectivity lower than that of the layer L3, the layers L1, L2, L3, and L4 being positioned in sequence.

31. The method of claim 30 in which after inscription, the layers L3 and L4 combine to form a layer L5 that has a reflectivity that is higher than the layer L2 but lower than the layer L3.

32. An optical recording device configured to have optical contrast formed thereon according to method of any of claim 1 through 31.


**Patentansprüche**

1. Verfahren zum Erzeugen von optischem Kontrast, umfassend:

   Zuführen von Energie zu einer wenigstens eine erste Schicht L1, eine zweite Schicht L2, und eine dritte Schicht L3 aufweisenden mikroresonanten Struktur, um wenigstens zwei der Schichten zu veranlassen, sich zu verbinden,
   wobei die Schicht L2 zwischen den Schichten L1 und L3 angeordnet ist, die Schicht L1 ein Reflexionsvermögen R1 und ein Transmissionsvermögen T1 aufweist, die Schicht L3 ein Reflexionsvermögen R3 aufweist und die Schicht L2 ein Transmissionsvermögen T2 und eine Dicke aufweist, die weniger als ein Viertel einer Wellenlänge eines Lesestrahls beträgt, wobei der Lesestrahl eine Frequenz im Bereich von 400 nm bis 460 nm, 630 nm bis 690 nm oder 750 bis 810 nm aufweist,
   wobei vor dem Zuführen der Energie die mikroresonante Struktur ein Gesamtreflexionsvermögen $R_{sum}$ aufweist, das größer als $R1+T1^2*T2^2*R3$ ist.

2. Verfahren gemäß Anspruch 1, wobei die Schicht L2 eine Dicke aufweist, die weniger als eine Debye-Länge beträgt, bestimmt auf der Basis einer Ladungsträgerdichte der Schicht L2.

3. Verfahren gemäß Anspruch 1, wobei nach Zuführen der Energie das Reflexionsvermögen der mikroresonanten Struktur abnimmt.

4. Verfahren gemäß Anspruch 1, wobei nach Zuführen der Energie das Transmissionsvermögen der mikroresonanten Struktur zunimmt.

5. Verfahren gemäß Anspruch 1, wobei die Schicht L2 ein geringeres Reflexionsvermögen als die Schichten L1 und L3 aufweist.

6. Verfahren gemäß Anspruch 1, wobei die Schicht L2 ein größeres Transmissionsvermögen als die Schichten L1 und L3 aufweist.

7. Verfahren gemäß Anspruch 1, wobei sich die Schichten L2 und L3 zur Bildung einer Schicht L4 verbinden, die ein größeres Transmissionsvermögen als die Schicht L2 aufweist.

8. Verfahren gemäß Anspruch 1, wobei sich die Schichten L1 und L2 zur Bildung einer Schicht L4 verbinden, die ein größeres Reflexionsvermögen als die Schicht L2 aufweist.

9. Verfahren gemäß Anspruch 1, wobei die Schichten L1, L2 und L3 sich zur Bildung einer Schicht L4 verbinden.

10. Verfahren gemäß Anspruch 9, wobei die Schicht L4 ein Transmissionsvermögen aufweist, das größer ist als das Gesamttransmissionsvermögen der Schichten L1, L2 und L3 vor Beschriftung.

11. Verfahren gemäß Anspruch 9, wobei die Schicht L4 ein Reflexionsvermögen aufweist, das geringer ist als das Gesamtreflexionsvermögen der Schichten L1, L2 und L3 vor Beschriftung.

12. Verfahren gemäß Anspruch 1, wobei sich die Schichten L2 und L3 zur Bildung einer Schicht L4 verbinden, die ein geringeres Reflexionsvermögen als die Schichten L1 und L3 aufweist.

13. Verfahren gemäß Anspruch 1, wobei die mikroresonante Struktur auch eine Schicht L4 aufweist, die ein größeres Reflexionsvermögen als die Schicht L2 aufweist, wobei die Schichten L1, L4, L2 und L3 der Reihe nach angeordnet sind.

14. Verfahren gemäß Anspruch 13, wobei das Zuführen der Energie die Schichten L4 und L2 veranlasst, sich zur Bildung einer Schicht L5 zu verbinden, die ein geringeres Reflexionsvermögen als die Schichten L1 und L3 aufweist, wobei die Schicht L5 zwischen den Schichten L1 und L3 angeordnet ist.

15. Verfahren gemäß Anspruch 1, wobei die mikroresonante Struktur auch eine Schicht L4 aufweist, die ein geringeres Reflexionsvermögen als die Schichten L1 und L3 aufweist, wobei die Schichten L1, L2, L4 und L3 der Reihe nach angeordnet sind.

16. Verfahren gemäß Anspruch 15, wobei sich die Schichten L4 und L3 zur Bildung einer Schicht L5 verbinden, die ein größeres Reflexionsvermögen als die Schicht L2 aufweist, wobei die Schicht L2 zwischen den Schichten L1 und L5 angeordnet ist.

17. Verfahren gemäß Anspruch 1, wobei das Zuführen der Energie an die mikroresonante Struktur die Schichten L2 und L3 veranlasst, sich zur Bildung einer Schicht L4 zu verbinden, die ein größeres Transmissionsvermögen als die Schichten L1 aufweist.

18. Verfahren gemäß Anspruch 1, wobei die mikroresonante Struktur auch eine Schicht L4 aufweist, die ein geringeres Reflexionsvermögen als die Schichten L1 und L3 aufweist, wobei die Schichten L1, L2, L4 und L3 der Reihe nach angeordnet sind und die Schichten L2 und L4 unterschiedliche Materialien aufweisen.

19. Verfahren gemäß Anspruch 18, wobei nach Beschriftung sich die Schichten L1 und L2 teilweise zur Bildung einer Schicht L5 verbinden, die ein geringeres Reflexionsvermögen als die Schicht L1 aufweist.

20. Verfahren gemäß Anspruch 18, wobei nach Beschriftung sich die Schichten L2 und L4 zur Bildung einer Schicht L5 teilweise verbinden, die eine Dicke aufweist, die geringer ist als die Summe der Dicken der Schichten L2 und L4, wobei die Schicht L5 ein geringeres Reflexionsvermögen als die Schichten L1 und L3 aufweist.

21. Verfahren gemäß Anspruch 1, wobei die mikroresonante Struktur auch Schichten L4, L5 und L6 aufweist, wobei die Schichten L1, L2, L4, L5, L6 und L3 der Reihe nach angeordnet sind und die Schichten L4, L5 und L6 ein geringeres Reflexionsvermögen als die Schichten L1 und L3 aufweisen und benachbarte Schichten von L2, L4, L5 und L6 unterschiedlichen Materialien aufweisen.

22. Verfahren gemäß Anspruch 21, wobei nach Beschriftung sich die Schichten L4 und L5 zur Bildung einer Schicht L7 verbinden, wobei die Schicht L7 ein größeres Reflexionsvermögen als die Schichten L2 und L6 aufweist.

23. Verfahren gemäß Anspruch 22, wobei nach Beschriftung die Schichten L1, L2 und L7 einen mikroresonanten Hohlraum bilden, der ein Gesamtreflexionsvermögen aufweist, das größer als $R1+T1^2*T2^2*R7$ ist, wobei R7 das Reflexionsvermögen der Schicht L3 ist.

24. Verfahren gemäß Anspruch 22, wobei nach Beschriftung die Schichten L1, L2 und L7 einen mikroresonanten Hohlraum bilden, der ein Gesamtreflexionsvermögen $R_{sum}$ aufweist, wobei $R_{sum}<R1$ und $R_{sum}<T1^2*T2^2*R7$ ist, wobei R7 das Reflexionsvermögen der Schicht L7 ist.

25. Verfahren gemäß Anspruch 22, wobei nach Beschriftung die Schichten L7, L6 und L3 einen mikroresonanten Hohlraum bilden, der ein Gesamtreflexionsvermögen aufweist, das größer als $R7+T7^2*T6^2*R3$ ist, wobei R7 das Reflexionsvermögen der Schicht L7 ist und T7 das Transmissionsvermögen der Schicht L7 ist.

26. Verfahren gemäß Anspruch 22, wobei nach Beschriftung die Schichten L7, L6 und L3 einen mikroresonanten Hohlraum bilden, der ein Gesamtreflexionsvermögen $R_{sum}$ aufweist, wobei $R_{sum}<R7$ und $R_{sum}<T7^2*T6^2*R3$ ist, wobei R7 das Reflexionsvermögen der Schicht L7 ist und T7 das Transmissionsvermögen der Schicht L7.

27. Verfahren gemäß Anspruch 1, wobei die mikroresonante Struktur auch Schichten L4 und L5 umfasst, wobei die Schichten L1, L2, L4, L5 und L3 der Reihe nach angeordnet sind und die Schichten L1, L2 und L4 einen mikroresonanten Hohlraum bilden, der ein Gesamtreflexionsvermögen aufweist, das größer als $R1+T1^2*T2^2*R4$ ist, wobei R4 das Reflexionsvermögen der Schicht L4 ist, wobei die Schichten L4, L5 und L3 einen mikroresonanten Hohlraum bilden, der ein Gesamtreflexionsvermögen aufweist, das größer als $R4+T4^2*T5^2*R3$ ist, wobei T4 das Transmissionsvermögen der Schicht L4 ist und T5 das Transmissionsvermögen der Schicht L5 ist.

28. Verfahren gemäß Anspruch 27, wobei nach Beschriftung sich die Schichten L2, L4 und L5 zur Bildung einer Schicht L6 verbinden, wobei die Schichten L1, L6 und L3 einen mikroresonanten Hohlraum bilden.

29. Verfahren gemäß Anspruch 28, wobei das Gesamtreflexionsvermögen der mikroresonanten Struktur vor Beschriftung größer ist als das Gesamtreflexionsvermögen der mikrorsonanten Struktur nach Beschriftung.

30. Verfahren gemäß Anspruch 1, wobei die mikroresonante Struktur auch eine Schicht L4 umfasst, die ein geringeres Reflexionsvermögen als die Schicht L3 aufweist, wobei die Schichten L1, L2, L3 und L4 der Reihe nach angeordnet sind.

31. Verfahren gemäß Anspruch 30, wobei nach Beschriftung sich die Schichten L3 und L4 zur Bildung einer Schicht L5 verbinden, die ein Reflexionsvermögen aufweist, das größer als das der Schicht L2 ist, jedoch geringer als das der Schicht L3.

32. Optische Aufzeichnungsvorrichtung, die so ausgebildet ist, dass darauf optischer Kontrast gemäß dem Verfahren nach einem der Ansprüch 1 bis 31 gebildet wird.

**Revendications**

1. Procédé de génération de contraste optique comprenant :

   l'application d'une énergie sur une structure micro-résonnante ayant au moins une première couche L1, une deuxième couche L2 et une troisième couche L3 pour amener au moins deux des couches à s'associer, dans lequel la couche L2 est disposée entre les couches L1 et L3, la couche L1 a une réflectivité R1 et une transmissivité T1 la couche L3 a une réflectivité R3 et la couche L2 a une transmissivité T2 et une épaisseur qui est inférieure à un quart d'une longueur d'onde d'un faisceau de lecture, dans lequel le faisceau de lecture a une fréquence dans la plage de 400 nm à 460 nm, de 630 nm à 690 nm, ou de 750 à 810 nm, dans lequel, avant l'application de l'énergie, la structure micro-résonnante a une réflectivité globale $R_{sum}$ qui est supérieure à $R1 + T1^2 * T2^2 * R3$.

2. Procédé selon la revendication 1, dans lequel la couche L2 a une épaisseur qui est inférieure à une longueur Debye déterminée sur la base d'une densité de porteurs de charges de la couche L2.

3. Procédé selon la revendication 1, dans lequel, après l'application de l'énergie, la réflectivité de la structure micro-résonnante diminue.

4. Procédé selon la revendication 1, dans lequel, après l'application de l'énergie, la transmissivité de la structure micro-résonnante augmente.

5. Procédé selon la revendication 1, dans lequel la couche L2 a une réflectivité qui est inférieure à celles des couches L1 et L3.

6. Procédé selon la revendication 1, dans lequel la couche L2 a une transmissivité supérieure à celle des couches L1 et L3.

7. Procédé selon la revendication 1, dans lequel les couches L2 et L3 s'associent pour former une couche L4 qui a une réflectivité supérieure à celle de la couche L2.

8. Procédé selon la revendication 1, dans lequel les couches L1 et L2 s'associent pour former une couche L4 qui a une réflectivité supérieure à celle de la couche L2.

9. Procédé selon la revendication 1, dans lequel les couches L1, L2 et L3 s'associent pour former une couche L4.

10. Procédé selon la revendication 9, dans lequel la couche L4 a une transmissivité supérieure à la transmissivité globale des couches L1, L2 et L3 avant inscription.

11. Procédé selon la revendication 9, dans lequel la couche L4 a une réflectivité inférieure à la réflectivité globale des couches L1, L2 et L3 avant inscription.

12. Procédé selon la revendication 1, dans lequel les couches L2 et L3 s'associent pour former une couche L4 qui a une réflectivité inférieure à celles des couches L1 et L3.

13. Procédé selon la revendication 1, dans lequel la structure micro-résonnante comprend également une couche L4 ayant une réflectivité supérieure à celle de la couche L2, les couches L1, L4, L2 et L3 étant positionnées en séquence.

14. Procédé selon la revendication 13, dans lequel l'application de l'énergie amène les couches L4 et L2 à s'associer pour former une couche L5 qui a une réflectivité inférieure à celles des couches L1 et L3, la couche L5 étant disposée entre les couches L1 et L3.

15. Procédé selon la revendication 1, dans lequel la structure micro-résonnante comprend également une couche L4 ayant une réflectivité inférieure à celles des couches L1 et L3, les couches L1, L2, L4 et L3 étant positionnées en séquence.

16. Procédé selon la revendication 15, dans lequel les couches L4 et L3 s'associent pour former une couche L5 qui a une réflectivité supérieure à celle de la couche L2, la couche L2 étant disposée entre les couches L1 et L5.

17. Procédé selon la revendication 1, dans lequel l'application d'une énergie à la structure micro-résonnante amène les couches L2 et L3 à s'associer pour former une couche L4 qui a une transmissivité supérieure à celle de la couche L1.

18. Procédé selon la revendication 1, dans lequel la structure micro-résonnante comprend également une couche L4 ayant une réflectivité inférieure à celles des couches L1 et L3, les couches L1, L2, L4 et L3 étant positionnées en séquence, les couches L2 et L4 ayant des matériaux différents.

19. Procédé selon la revendication 18, dans lequel, après inscription, les couches L1 et L2 s'associent pour former une couche L5 qui a une réflectivité inférieure à celle de la couche L1.

20. Procédé selon la revendication 18, dans lequel, après inscription, les couches L2 et L4 s'associent partiellement pour former une couche L5 ayant une épaisseur inférieure à une somme des épaisseurs des couches L2 et L4, la couche L5 ayant une réflectivité inférieure à celles des couches L1 et L3.

21. Procédé selon la revendication 1, dans lequel la structure micro-résonnante comprend également des couches L4, L5 et L6, les couches L1, L2, L4, L5, L6 et L3 étant positionnées en séquence, les couches L4, L5 et L6 ayant des réflectivités inférieures à celles des couches L1 et L3, et les couches adjacentes de L2, L4, L5 et L6 ayant des matériaux différents.

22. Procédé selon la revendication 21, dans lequel les couches L4 et L5 s'associent pour former une couche L7 après inscription, la couche L7 ayant une réflectivité supérieure à celles des couches L2 et L6.

23. Procédé selon la revendication 22, dans lequel les couches L1, L2 et L7 forment une cavité micro-résonnante ayant une réflectivité globale supérieure à $R1 + T1^2 * T2^2 * R7$, R7 étant la réflectivité de la couche L3.

24. Procédé selon la revendication 22, dans lequel, après inscription, les couches L1, L2 et L7 forment une cavité micro-résonnante ayant une réflectivité globale $R_{sum}$, dans lequel $R_{sum} < R1$ et $R_{sum} < T1^2 * T2^2 * R7$, R7 étant la réflectivité de la couche L7.

25. Procédé selon la revendication 22, dans lequel, après inscription, les couches L7, L6, et L3 forment une cavité micro-résonnante ayant une réflectivité globale supérieure à $R7 + T7^2 * T6^2 * R3$, R7 étant la réflectivité de la couche L7, T7 étant la transmissivité de la couche L7.

37

26. Procédé selon la revendication 22, dans lequel, après inscription, les couches L7, L6, et L3 forment une cavité micro-résonnante ayant une réflectivité globale $R_{sum}$, dans lequel $R_{sum} < R7$ et $R_{sum} < T7^2 * T6^2 * R3$, R7 étant la réflectivité de la couche L7, T7 étant la transmissivité de la couche L7.

27. Procédé selon la revendication 1, dans lequel la structure micro-résonnante comprend également les couches L4 et L5, les couches L1, L2, L4, L5 et L3 étant positionnées en séquence, les couches L1, L2 et L4 formant une cavité micro-résonnante ayant une réflectivité globale supérieure à $R1 + T1^2 * T2^2 * R4$, R4 étant la réflectivité de la couche L4, les couches L4, L5 et L3 forment une cavité micro-résonnante ayant une réflectivité globale supérieure à $R4 + T4^2 * T5^2 * R3$, T4 étant la transmissivité de la couche L4, T5 étant la transmissivité de la couche L5.

28. Procédé selon la revendication 27, dans lequel les couches L2, L4 et L5 s'associent pour former une couche L6 après inscription, les couches L1, L6 et L3 formant une cavité micro-résonnante.

29. Procédé selon la revendication 28, dans lequel la réflectivité globale de la structure micro-résonnante avant inscription est supérieure à la réflectivité globale de la structure micro-résonnante après inscription.

30. Procédé selon la revendication 1, dans lequel la structure micro-résonnante comprend également une couche L4 ayant une réflectivité inférieure à celle de la couche L3, les couches L1, L2, L3 et L4 étant positionnées en séquence.

31. Procédé selon la revendication 30, dans lequel, après inscription, les couches L3 et L4 s'associent pour former une couche L5 qui a une réflectivité supérieure à celle de la couche L2 mais inférieure à celle de la couche L3.

32. Dispositif d'enregistrement optique configuré pour avoir un contraste optique formé sur celui-ci d'après le procédé selon l'une quelconque des revendications 1 à 31.

FIG. 1A

FIG. 1B

FIG. 2A

FIG. 2B

144     140     144     140

128

142     124     142

M2

M3

M3

126

M1

122

120

## FIG. 2C

150

152   Select candidate materials and pairs

154   Deposit two-layer samples

155   Measure optical properties of samples

156   Heat treat two-layer samples

158   Measure optical properties of samples

160   Select candidate thicknesses

162   Form test disc

164   Inscribe disc

166   Measure optical properties

## FIG. 3

(Before inscription)   128

M2   124  } 126

170   M1   122

108   120

# FIG. 4A

(After inscription)   128

M3

172   126

108   120

# FIG. 4B

128

127

R

M2   124

M1   122  } 126

120

# FIG. 4C

(Before inscription) 128

M2 124 126

170 M1

122

120

## FIG. 5A

(After inscription) 128

M2 126

M3 M1

120

## FIG. 5B

M2 180 128

124

M1

122

120

## FIG. 6A

—————————————————— 128

——————————————————

M2

M1     ⌒ ⌒ ⌒ ⌒
———————————————

—— 120

## FIG. 6B  ——————————————

—————————————————— 128

M1          M1

⌒ ⌒ ⌒ ⌒ ⌒
———————————————

M2          —— 120

## FIG. 6C  ——————————————

—————————————————— 128

M2                    M2

M1  ⊓ ⊓ ⊓ ⊓  M1
———————————————

—— 120

## FIG. 6D  ——————————————

290

128

Second
inscription
layer
294

$T_1$    $T_1 \cdot R_2$    $T'_1 \cdot R'_2$    Spacer
layer
296    First
inscription
layer
292

$T'_1$

120

$R_1$    $R'_1$    $T'_1 \cdot R'_2 \cdot T'_1$

$T_1 \cdot R_2 \cdot T_1$

Read beam 1    Read beam 2

FIG. 7

FIG. 8A

FIG. 8B

FIG. 8C

FIG. 9

FIG. 10

FIG. 11

FIG. 12

FIG. 13

FIG. 14A

Thickness of layer 232

d

FIG. 14B

Thickness of layer 232

d

(Before inscription)              (After inscription)

240

R1  T1  R2                 R1     R3

## FIG. 15

(Before inscription)             (After inscription)

242

R1  R3  T1  R2            R1     T2     R2

$d_1$                     $d_2$

## FIG. 16

(Before inscription)             (After inscription)

244

R1  T1  T2  R2           R1   T1     R3

$d_3$                     $d_1$

## FIG. 17

(Before inscription)                    246                    (After inscription)

R1    T1    R2                                                  R1        T2

FIG. 18

(Before inscription)         248         (After inscription)

R1    T1    T2    R2                      T3    T2    R2

282

FIG. 19

(Before inscription)

R1　T1　T2　T3　T4　R2

250

(After inscription)

R1　T1　R3　T4　R2

252

254　256

FIG. 20

(Before inscription)

R1　T1　R3　T2　R2

270

(After inscription)

R1　T3　R2

292　294

276

FIG. 21

EP 1 939 873 B1

FIG. 22

FIG. 23

FIG. 24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FRANCIS CHEN.** Introduction to Plasma Physics. *Debye Shielding,* 8-11